# EUROPEAN PATENT APPLICATION

(11) **EP 4 804 657 A1**
(43) Date of publication of application: **09.09.2026**
(21) Application number: 24895674.0
(22) Date of filing: 23.07.2024
(51) Int. Cl.: H04W 60/00, H04W 8/02

(54) **NETWORK REGISTRATION METHOD IN ROAMING SCENARIO AND TERMINAL DEVICE**

(30) Priority: 30.11.2023 CN 202311637625
(71) Applicant: Honor Device Co., Ltd., Shenzhen, Guangdong 518040 (CN)
(72) Inventor: WEI, Zhenrong, Shenzhen, Guangdong 518040 (CN)
(74) Representative: Isarpatent
(86) International application number: PCT/CN2024/106911
(87) International publication number: WO 2025/112571

(57) **Abstract**

This application relates to the field of communication and provides a network registration method in a roaming scenario and a terminal device. In the method, when the terminal device fails to register with a high-standard first network (for example, a 4G network) of a PLMN of a first roaming area operator (for example, China Mobile), and receives a registration rejection message instructing to search the PLMN of the first roaming area operator for a second network (for example, a 3G network or a 2G network) with a lower network standard than the first network, the terminal device searches a PLMN of each of other roaming area operators in a roaming area for the high-standard first network in response to the registration rejection message. In this way, when the high-standard first network is found on a PLMN of a second roaming area operator (for example, China Telecom) among the other roaming area operators, the terminal device sends a registration request to request registration with the high-standard first network, so that the terminal device has more opportunities to preferentially register with the high-standard first network, thereby improving user experience.

## Description

This application claims priority to Chinese Patent Application No. 202311637625.4, filed with the China National Intellectual Property Administration on November 30, 2023 and entitled "NETWORK REGISTRATION METHOD IN ROAMING SCENARIO AND TERMINAL DEVICE", which is incorporated herein by reference in its entirety.

### TECHNICAL FIELD

This application relates to the communication field, and more specifically, to a network registration method in a roaming scenario and a terminal device in the communication field.

### BACKGROUND

Mobile communication is a communication mode widely used across the globe at present. A terminal device (for example, a mobile phone) needs to search for a public land mobile network (public land mobile network, PLMN), and can perform normal network communication only after completing network registration on the PLMN. Currently, international or domestic roaming is allowed between various operators, which is hereinafter referred to as inter-operator roaming for short. Different operators have different PLMNs. For example, if a home operator of a terminal device is an operator A, the terminal device may register, in a roaming manner, with a network of another operator that has signed a roaming protocol with the operator A.

In a roaming scenario, if the terminal device preferentially finds a high-standard network (for example, a 4G network) on a PLMN of an operator (for example, an operator B) in a roaming area, but fails to register with the high-standard network on the PLMN of the operator, the terminal device receives a registration rejection message including, for example, a cause value #111. In response to the registration rejection message, the terminal device suspends and disables the high-standard network on the PLMN of the operator, suspends network search on a PLMN of another operator in the roaming area, and preferentially searches, for a low-standard network (for example, a 2G network or a 3G network), the PLMN of the operator on which the network has been previously found. If the operator supports roaming registration of the terminal device with the low-standard network, when the terminal device finds and successfully registers with the low-standard network of the operator, the terminal device performs communication over the low-standard network, resulting in poor user experience.

### SUMMARY

Embodiments of this application provide a network registration method in a roaming scenario and a terminal device. When the terminal device fails to register with a high-standard network of a PLMN of a roaming area operator in a roaming area, the terminal device searches a PLMN of each of other roaming area operators in the roaming area for a high-standard network in response to a received registration rejection message, to attempt to register with the high-standard network. In this way, when a high-standard network exists on a PLMN of another roaming area operator in a roaming area, the terminal device has more opportunities to preferentially register with the high-standard network, thereby improving user experience of network usage in the roaming scenario.

According to a first aspect, a network registration method in a roaming scenario is provided, including: sending a first registration request when a first network is found on a PLMN of a first roaming area operator in a roaming area, where the first registration request is used for requesting registration of the terminal device with the first network on the PLMN of the first roaming area operator; receiving a registration rejection message in response to the first registration request, where the registration rejection message is used for indicating that the terminal device has not successfully registered with the first network on the PLMN of the first roaming area operator, and used for instructing the terminal device to search the PLMN of the first roaming area operator for a second network with a lower network standard than the first network; searching a PLMN of each of other roaming area operators in the roaming area other than the first roaming area operator for the first network in response to the registration rejection message; and sending a second registration request when the first network is found on a PLMN of a second roaming area operator among the other roaming area operators, to register the terminal device with the first network on the PLMN of the second roaming area operator.

According to the network registration method in a roaming scenario provided in embodiments of this application, for example, when the terminal device fails to register with a high-standard first network (for example, a 4G network) of a PLMN of a first roaming area operator (for example, China Mobile), and receives a registration rejection message instructing to search the PLMN of the first roaming area operator for the second network (for example, a 3G network or a 2G network) with the lower network standard than the first network, the terminal device searches, for the high-standard first network, the PLMN of the another roaming area operator in the roaming area other than the roaming area operator in response to the registration rejection message. In this way, when the high-standard first network is found, for example, on a PLMN of a second new roaming area operator (for example, China Telecom), the terminal device sends the registration request to request registration with the high-standard first network of the second roaming area operator, so that the terminal device has more opportunities to preferentially register with the high-standard first network, thereby avoiding a problem of poor user experience in the related art as a result of the terminal device searching the PLMN of the first roaming area operator for a low-standard second network for example and finally registering with the low-standard second network, and effectively improving user experience of network usage in the roaming scenario.

In some embodiments, in the foregoing step of searching, for the first network, the PLMN of the another roaming area operator in the roaming area other than the first roaming area operator in response to the registration rejection message, the PLMN of the another roaming area operator is searched for the first network within a first preset duration in response to the registration rejection message.

According to the network registration method in a roaming scenario provided in embodiments of this application, the first preset duration is set, and the search of the PLMN of the another roaming area operator for the first network is limited within the first preset duration. This may avoid a problem that the terminal device cannot access a network for an extended period due to prolonged continuous searching for the first network, thereby further improving user experience of network usage in the roaming scenario.

In some embodiments, after the foregoing step of sending the second registration request when the first network is found on the PLMN of the second roaming area operator among the other roaming area operators to register the terminal device with the first network on the PLMN of the second roaming area operator, the method further includes: still searching, for the first network, a PLMN of a roaming area operator among the other roaming area operators other than the second roaming area operator within the first preset duration when the terminal device has not successfully registered with the first network on the PLMN of the second roaming area operator and the first preset duration has not expired.

In this way, a chance for the terminal device to find the first network can be increased, to increase a chance of registering with the first network, and improve user experience of network usage in the roaming scenario.

In some embodiments, after the foregoing step of sending the second registration request when the first network is found on the PLMN of the second roaming area operator among the other roaming area operators to register the terminal device with the first network on the PLMN of the second roaming area operator, the method further includes: searching a PLMN of at least one roaming area operator in the roaming area for the second network with a lower network standard than the first network when the terminal device has not successfully registered with the first network on the PLMN of the second roaming area operator and the first preset duration has expired.

According to the network registration method in a roaming scenario provided in embodiments of this application, when the first preset duration has expired, and the terminal device also has not successfully registered with, for example, the first network on the PLMN of the second roaming area operator, to enable the terminal device to access the network as soon as possible, the terminal device no longer searches for the first network, but searches the PLMN of the at least one roaming area operator in the roaming area for the low-standard second network to register with the second network, thereby reducing a risk that the terminal device cannot access the network for a long time, and increasing a probability that the terminal device can access the network as soon as possible.

In some embodiments, the method further includes: searching the PLMN of the at least one roaming area operator in the roaming area for the second network with the lower network standard than the first network before the first preset duration expires when the first preset duration has not expired and the first network is not found on a PLMN of any one of the other roaming area operators.

According to the network registration method in a roaming scenario provided in embodiments of this application, a case where the first preset duration has not expired and the first network is not found on the PLMN of any one of the other roaming area operators means that the terminal device has traversed all roaming area operators among the other roaming area operators before the first preset duration expires. A result of the traversal is that no first network is found on the PLMN of any one roaming area operator. In this way, when it has been identified that the first network is not found on the PLMN of any one roaming area operator, a search duration (that is, the first preset duration) is ended in advance to search the PLMN of at least one roaming area operator in the roaming area for a low-standard second network in advance (that is, before the first preset duration expires). This reduces an unnecessary search duration, and allows the terminal device to search for another network earlier to access the network as early as possible, thereby improving user experience of network usage in the roaming scenario.

In some embodiments, the method further includes: searching the PLMN of the at least one roaming area operator in the roaming area for the second network with the lower network standard than the first network when the first preset duration has expired and the first network is not found on the PLMN of the another roaming area operator.

According to the network registration method in a roaming scenario provided in embodiments of this application, the first network is no longer searched after the first preset duration expires. Instead, the PLMN of the at least one roaming area operator in the roaming area is searched for the low-standard second network, so that the terminal device can search for another network to access the network as soon as possible, thereby reducing a risk that the terminal device cannot access the network for a long time, and increasing a probability that the terminal device can access the network as soon as possible.

In some embodiments, the method further includes: searching the PLMN of the at least one roaming area operator in the roaming area for the second network with the lower network standard than the first network when the first network is not found on a PLMN of at least a part of the other roaming area operators.

In this way, the terminal device can search for another network to access the network as soon as possible, thereby reducing a risk that the terminal device cannot access the network for a long time, and increasing a probability that the terminal device can access the network as soon as possible.

In some embodiments, the method further includes: searching the PLMN of the at least one roaming area operator in the roaming area for the second network with the lower network standard than the first network when the terminal device has not successfully registered with the first network on the PLMN of the second roaming area operator.

In this way, the terminal device can search for another network to access the network as soon as possible, thereby reducing a risk that the terminal device cannot access the network for a long time, and increasing a probability that the terminal device can access the network as soon as possible.

In some embodiments, in the foregoing step of searching the PLMN of the at least one roaming area operator in the roaming area for the network with the lower network standard than the first network, the PLMN of the first roaming area operator is preferentially searched for the second network with the lower network standard than the first network.

According to the network registration method in a roaming scenario provided in embodiments of this application, in a process of searching for the low-standard second network, the terminal device preferentially searches, for the second network, the PLMN of the first roaming area operator of the first network that has been found previously. In this way, for the process of searching for the low-standard second network, an existing protocol may be followed as much as possible, thereby reducing a change in a protocol, and achieving an objective of simplifying the design.

In some embodiments, the searching the PLMN of the another roaming area operator for the first network within a first preset duration in response to the registration rejection message includes: in response to the registration rejection message, prohibiting use of the first network on the PLMN of the first roaming area operator within a second preset duration, and searching the PLMN of the another roaming area operator for the first network within the first preset duration, where the first preset duration is less than the second preset duration.

According to the network registration method in a roaming scenario provided in embodiments of this application, since the registration to the first network on the PLMN of the first roaming area operator fails, the second preset duration is defined, and the terminal device is prohibited from using the first network on the PLMN of the first roaming area operator within the second preset duration. This may avoid a problem that the terminal device cannot access the network for an extended period as a result of a plurality of unsuccessful attempts to register with the first network on the PLMN of the first roaming area operator within a short period of time.

In some embodiments, in the foregoing step of searching the PLMN of the another roaming area operator for the first network within the first preset duration in response to the registration rejection message, a timer is started in response to the registration rejection message. A duration of the timer is the first preset duration. The PLMN of the another roaming area operator is searched for the first network within the duration of the timer.

In some embodiments, the registration rejection message includes any one of the following cause values: a cause value #111, a cause value #16, and a cause value #17.

In some embodiments, the first network is a 5G network or a 4G network.

In some embodiments, the first network is a 6G network or a network with a higher standard.

According to a second aspect, a terminal device is provided. The terminal device is configured to perform the method provided in the foregoing first aspect. Specifically, the terminal device may include a module for performing any one possible implementation in the foregoing first aspect.

According to a third aspect, a terminal device is provided, including a processor. The processor is coupled to a memory, and may be configured to execute instructions in the memory, to implement the method according to any one possible implementation in the foregoing first aspect. Optionally, the terminal device further includes the memory. Optionally, the apparatus further includes a communication interface, and the processor is coupled to the communication interface.

According to a fourth aspect, a computer-readable storage medium is provided, storing a computer program. The computer program, when executed by an apparatus, enables the apparatus to implement the method according to any one possible implementation in the foregoing first aspect.

According to a fifth aspect, a computer program product including instructions is provided. The instructions, when executed by a computer, enable an apparatus to implement the method according to any one possible implementation in the foregoing first aspect.

According to a sixth aspect, a chip is provided, including an input interface, an output interface, a processor, and a memory. The input interface, the output interface, the processor, and the memory are connected through an internal connection path. The processor is configured to execute code in the memory. When the code is executed, the processor is configured to perform the method according to any one possible implementation in the foregoing first aspect.

### BRIEF DESCRIPTION OF DRAWINGS

FIG. 1 is a schematic scenario diagram of a mobile communication system according to an embodiment of this application.
FIG. 2 is a schematic structural diagram of a terminal device according to an embodiment of this application.
FIG. 3 shows a network registration method in a roaming scenario in the related art according to an embodiment of this application.
FIG. 4 is an example flowchart of a network registration method in a roaming scenario according to an embodiment of this application.
FIG. 5 is a schematic flowchart of inter-device interaction in a network registration method in a roaming scenario according to an embodiment of this application.
FIG. 6 is another schematic flowchart of a network registration method in a roaming scenario according to an embodiment of this application.
FIG. 7 is another schematic flowchart of a network registration method in a roaming scenario according to an embodiment of this application.
FIG. 8 is a schematic block diagram of a terminal device according to an embodiment of this application.
FIG. 9 is a schematic structural diagram of a terminal device according to an embodiment of this application.

### DESCRIPTION OF EMBODIMENTS

The technical solutions in this application are to be described below with reference to the accompanying drawings.

First, a brief introduction to related concepts or terms involved in embodiments of this application is provided.

Public land mobile network (public land mobile network, PLMN)

The PLMN is a network established and operated by the government or an authorized operator thereof to provide public land mobile communication services. The PLMN is interconnected with a public switched telephone network to form a communication network covering an entire region or country. The PLMN is synonymous with a mobile communication network. Specifically, in China, the entire network of each mobile communication operator may be regarded as one single PLMN, and the networks of China Mobile, China Unicom, and China Telecom are different PLMNs.

The PLMN is composed of a mobile contrary code (mobile contrary code, MCC) and a mobile netcode (mobile netcode, MNC). The MCC uniquely represents a country to which a mobile user belongs. For example, the MCC of China is 460. The MNC may uniquely represent a network in the country. For example, an MNC of China Mobile Limited (abbreviated as China Mobile) may include 00, an MNC of China United Network Communications Group Co., Ltd. (abbreviated as China Unicom) includes 01, an MNC of China Telecom (abbreviated as Telecom) includes 11, and an MNC of China Broadcasting Network (abbreviated as CBN) includes 15. Each operator may include at least one PLMN.

Table 1 shows different PLMNs corresponding to different operators.

**Table 1**

| PLMN | | Operator |
|---|---|---|
| MCC | MNC | |
| 460 | 00 | China Mobile |
| 460 | 01 | China Unicom |
| 460 | 02 | China Mobile |
| 460 | 03 | China Telecom |
| 460 | 04 | China Mobile |
| 460 | 06 | China Unicom |
| 460 | 07 | China Mobile |
| 460 | 08 | China Mobile |
| 460 | 09 | China Unicom |
| 460 | 10 | China Unicom |
| 460 | 11 | China Telecom |
| 460 | 12 | China Telecom |
| 460 | 15 | CBN |

As shown in Table 1, the PLMNs of China Mobile may include 46000, 46002, 46004, 46007, and 46008, and the PLMNs of China Unicom may include 46001, 46006, 46009, and 46010. The PLMNs of China Telecom may include 46003, 46011, and 46012, and the PLMNs of CBN may include 46015. The PLMNs of the operator may further include other more PLMNs in future. This is not limited in this application.

### Home PLMN (home PLMN, HPLMN)

The HPLMN is a PLMN to which a terminal device belongs, and is referred to as the home PLMN. An MCC and an MNC included in an international mobile subscriber identification number (international mobile subscriber identification number, IMSI) on a universal subscriber identity module (universal subscriber identity module, USIM) card (which may also be referred to as a universal subscriber identity card) of a terminal user are consistent with an MCC and an MNC of the HPLMN. For a terminal device, the terminal device has only one home PLMN. For example, the PLMNs of China Mobile include 4 PLMNs, and the home PLMN of a terminal device is one of the 4 PLMNs.

### Home operator and roaming area operator

The home operator is an operator of a card of a terminal device. In other words, the home operator is an operator to which an HPLMN of the terminal device belongs. For example, if the card of the terminal device is a card of China Mobile, China Mobile is the home operator of the terminal device.

The roaming area operator is an operator of a roaming area, and is another operator other than the home operator. For example, international roaming is used as an example. Xiao Wang is a subscriber of China Mobile. China Mobile is a home operator of Xiao Wang's mobile phone. If he/she travels on business to Germany, an operator such as TMO located in Germany is a roaming area operator.

If the home operator signs a roaming protocol with a roaming area operator, the terminal device can access a PLMN of the roaming area operator in a roaming scenario. For example, if the home operator of the terminal device is China Mobile, and China Mobile signs a roaming protocol with TMO of Deutsche Telekom AG, the terminal device can access a PLMN of TMO in a roaming manner after the terminal device roams to Germany.

It should be understood that embodiments of this application not only may be applied to an international roaming scenario but also may be applied to a domestic roaming scenario. To save network construction costs, allowing domestic roaming between operators is an important means for reducing the network construction costs. In the domestic roaming scenario, for example, if the home operator of the terminal device is China Unicom, and China Unicom signs a roaming protocol with China Mobile, China Mobile is a roaming area operator, and the terminal device of China Unicom may access a network of China Mobile in a roaming manner.

The technical solutions in embodiments of this application are applicable to any communication system that supports a roaming service, for example, a global system for mobile communications (global system for mobile communications, GSM), a general packet radio service (general packet radio service, GPRS) system, wideband code division multiple access (wideband code division multiple access, WCDMA), time-division code division multiple access (time-division code division multiple access, TD-SCDMA), a long term evolution (long term evolution, LTE) system, an LTE frequency division duplex (frequency division duplex, FDD) system, LTE time division duplex (time division duplex, TDD), a fifth generation new radio (5th generation new radio, 5G NR) or future sixth generation (6th generation, 6G) system, or the like.

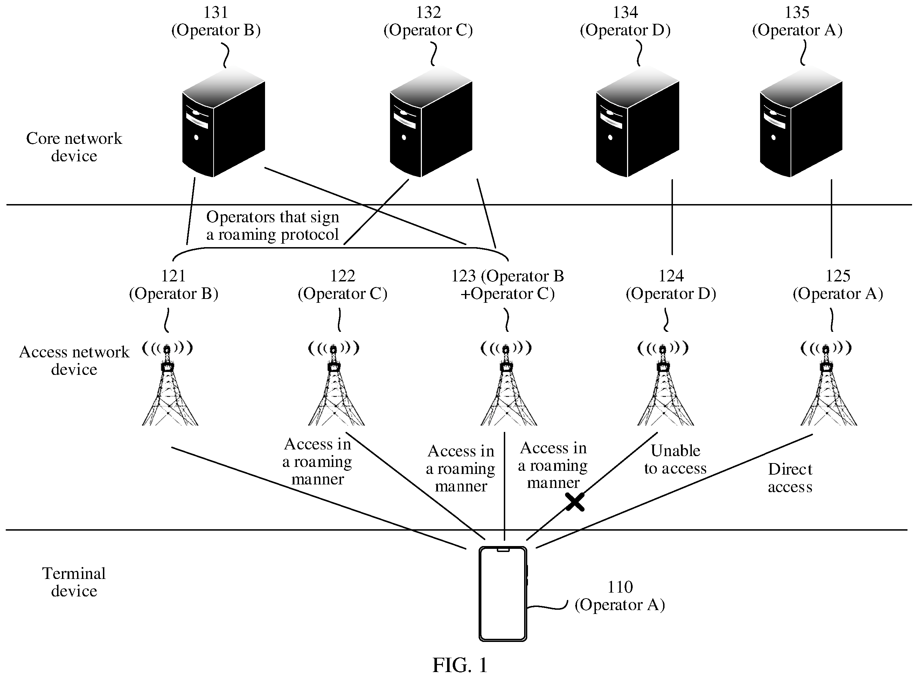

FIG. 1 is a schematic scenario diagram of a mobile communication system according to an embodiment of this application. Refer to FIG. 1. The mobile communication system includes a terminal device, at least one access network device, and at least one core network device. Quantities of core network devices, access network devices, and terminal devices in a mobile communication system are not limited in embodiments of this application. The terminal device is connected to the access network device in a wireless manner, and the access network device is connected to the core network device in a wireless or wired manner. The core network device and the access network device may be independent and different physical devices, or functions of the core network device and logical functions of the access network device may be integrated into a same physical device, and the physical device may further integrate some functions of the core network device and some functions of the access network device. The terminal device may be located at a fixed location, or may be mobile.

The access network device is a device through which the terminal device accesses the mobile communication system in a wireless manner, which may be a base station NodeB, an evolved base station (evolved NodeB, eNodeB), a transmission reception point (transmission reception point, TRP), a next generation base station (next generation NodeB, gNB) in a 5G mobile communication system, a base station in a future mobile communication system, or an access node in a Wi-Fi system, may further be a radio controller in a cloud radio access network (Cloud Radio Access Network, CRAN) scenario, and may further be a relay station, an on-board device, a wearable device, a network device in a future evolved PLMN network, or the like. A specific technology and a specific device form used by the access network device are not limited in embodiments of this application.

The terminal device is any device that may perform communication using a SIM card, and the terminal device may also be referred to as a terminal Terminal, a user equipment (user equipment, UE), a mobile station (mobile station, MS), a mobile terminal (mobile terminal, MT), or the like. The terminal device may be a mobile phone (mobile phone), a tablet computer (Pad), a computer with a wireless transceiver function, a smartwatch, or the like. Embodiments of this application impose no limitation on a specific technology and a specific device form used by the terminal device.

Different core network devices support different operators. As shown in FIG. 1, a core network device 131, a core network device 132, a core network device 133, and a core network device 134 support respective corresponding operators. To be specific, the core network device 131 supports an operator B, the core network device 132 supports an operator C, the core network device 133 supports an operator D, and the core network device 134 supports an operator A.

For an operator, a core network device of the operator performs a communication connection with a terminal device through an access network device of the operator.

One access network device may support one or more operators. When the access network device supports a plurality of operators, the plurality of operators jointly construct and share a network of the access network device to reduce network construction costs. Especially for a current access network device of a 5G network, to achieve the same coverage, a quantity of access network devices required for the 5G network is 3-4 times that of the access network devices required for a 4G networks. This can effectively reduce network construction costs in a manner of co-construction and sharing of the access network device.

In an example, as shown in FIG. 1, an access network device 121, an access network device 122, an access network device 124, and an access network device 125 each support one operator. Each operator constructs respective access network device.

In another example, as shown in FIG. 1, an access network device 123 supports two operators: an operator B and an operator C, that is, the operator B and the operator C jointly construct the access network device 123. In this way, the operator B and the operator C may share a network of the access network device 123 to reduce network construction costs. For example, Telecom and Unicom may jointly construct a 5G standalone (standalone, SA) base station. In this way, Telecom and Unicom may share a 5G network of a same base station. For another example, CBN and China Mobile may jointly construct a 5G SA base station. In this way, CBN and China Mobile may also share the 5G network of the same base station.

It should be noted that if an access network device supports a plurality of networks, a plurality of operators share only a network jointly constructed by both parties. For example, an access network device supports a 4G network and a 5G network. The 4G network is independently constructed by the operator B, and the operator B and the operator C only construct a 5G network. In this way, the operator B and the operator C can only share the 5G network, and the operator C cannot use the 4G network of the access network device.

In a non-roaming scenario, the terminal device may access a network of an access network device of a home operator. In a roaming scenario, the terminal device may access a network of an access network device of a roaming area operator that signs a roaming protocol with the home operator. As shown in FIG. 1, a home operator of a terminal device 110 is the operator A. The access network device 121 is an access network device of the operator B. The access network device 122 is an access network device of the operator C. The access network device 123 is an access network device of the 5G network jointly constructed by the operator B and the operator C. The access network device 124 is an access network device of an operator D. The access network device 125 is an access network device of the operator A.

It is assumed that the operator A has signed 5G network roaming protocols with both the operator B and the operator C, and the access network device 121, the access network device 122, and the access network device 123 all support 5G networks of respective operators. Then, the terminal device 110 may access the 5G network of the operator of each of the access network device 121, the access network device 122, and the access network device 123 in a roaming manner, may directly access a network of the access network device 125 of the home operator (the operator A), and cannot access a network of the access network device 124. It should be noted that since the access network device 123 is the access network device of the 5G network jointly constructed and shared by the operator B and the operator C, and the operator A has signed 5G network roaming protocols with both the operator B and the operator C, the terminal device 110 may access the access network device 123 in the roaming manner when roaming between the operator B and the operator C in a roaming scenario. In other words, the terminal device 110 accesses a 5G network of a same access network device in the roaming manner.

It is further assumed that the operator A has signed a 4G network roaming protocol with the operator B, the operator A has signed a 5G network roaming protocol with the operator C, the access network device 121 supports a 4G network of the operator B, the access network device 122 supports a 5G network of the operator C, and the access network device 123 supports the 5G network of the operator C and supports the 4G network of the operator B. Then the terminal device 110 may access, in a roaming manner, the 4G network of the access network device 121, the 5G network of the access network device 122, and the 5G network of the operator C of the access network device 123, cannot access the 5G network of the operator B of the access network device 123 and a network of the access network device 124, and may directly access a network of the access network device 125 of the home operator (the operator A). It should be noted that although the access network device 123 is the access network device of the 5G network jointly constructed and shared by the operator B and the operator C, the operator A signs a 5G network roaming protocol only with the operator C. Therefore, in a roaming scenario, the terminal device 110 can only access the 5G network of the operator C of the access network device 123 in the roaming manner, and cannot access the 5G network of the operator B of the access network device 123.

It should be understood that the mobile communication system shown in FIG. 1 is only a schematic description and should not constitute a limitation on embodiments of this application. For example, the mobile communication system may further include more or fewer core network devices, access network devices, and terminal devices.

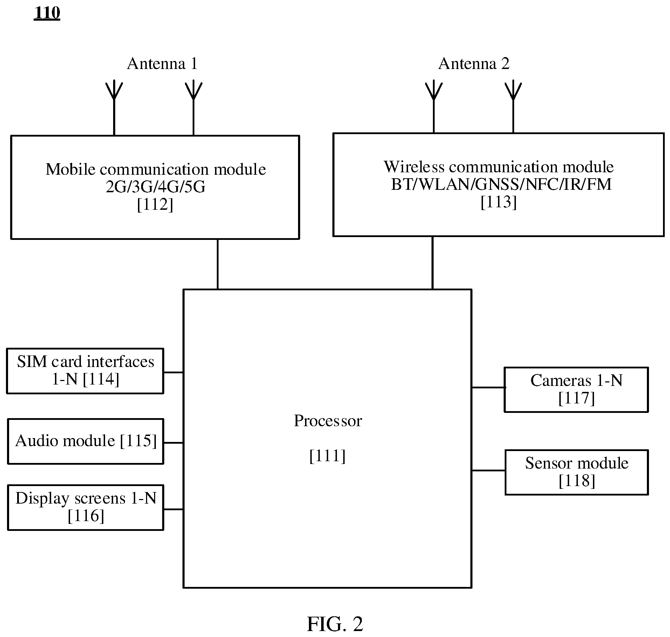

FIG. 2 is a schematic structural diagram of a terminal device 110. The terminal device 110 may include, but is not limited to, components such as a processor 111, an antenna 1, an antenna 2, a mobile communication module 112, a wireless communication module 113, and a subscriber identity module (subscriber identification module, SIM) card interface 114. For example, the terminal device 110 may further include components such as an audio module 115, a display screen 116, a camera 117, a sensor module 118, an external memory interface, an internal memory, a universal serial bus (universal serial bus, USB) interface, a charging management module, a power management module, a battery, a button, a motor, and an indicator.

It may be understood that the structure illustrated in embodiments of this application does not constitute a specific limitation on the terminal device 110. In some other embodiments of this application, the terminal device 100 may include more or fewer components than those shown in the figure, or some merged components, or some split components, or different component arrangements. The components shown in the figure may be implemented by hardware, software, or a combination of software and hardware.

The processor 111 may include one or more processing units. For example, the processor 111 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors. The controller may be a nerve center and a command center of the terminal device 110. The controller may generate an operation control signal based on an instruction operation code and a timing signal, to complete control of instruction fetching and execution.

A memory may further be arranged in the processor 110, and is configured to store instructions and data. In some embodiments, the memory in the processor 110 is a cache memory. The memory may store the instructions or data that has just been used or recycled by the processor 110. If the processor 110 needs to use the instructions or the data again, the processor may directly invoke the instructions or the data from the memory. This avoids repeated access, and reduces a waiting time of the processor 110, thereby improving system efficiency.

In embodiments of this application, the processor 110 searches for a network in a roaming scenario, sends a registration request to request registration with the network after finding a high-standard network (for example, a 4G network or a 5G network) of a PLMN of a roaming area operator in a roaming area, camps on the network for communication when the registration succeeds, and may search a PLMN of another roaming area operator in the roaming area for a network with a same network standard when the registration fails, to attempt to register with the high-standard network. In addition, when the high-standard network is not found on the PLMN of the another roaming area operator, a PLMN of at least one roaming area operator in the roaming area is searched for a low-standard network (for example, a 3G network or a 2G network) with a relatively low network standard, to enable the terminal device to access the network as much as possible.

A wireless communication function of the terminal device 110 may be implemented through the antenna 1, the antenna 2, the mobile communication module 112, the wireless communication module 113, a modem processor, a baseband processor, and the like.

The antenna 1 and the antenna 2 are configured to transmit and receive an electromagnetic wave signal. Each antenna in the terminal device 110 may be configured to cover one or more communications bands. Different antennas may further be reused, to improve antenna utilization. For example, the antenna 1 may be reused as a diversity antenna of a wireless local area network. In some other embodiments, the antenna may be used in combination with a tuning switch.

The mobile communication module 112 may provide a wireless communication solution applicable to the terminal device 110, including 2G/3G/4G/5G and the like. The mobile communication module 112 may include at least one filter, a switch, a power amplifier, a low noise amplifier (low noise amplifier, LNA), and the like. The mobile communication module 112 may receive an electromagnetic wave through the antenna 1, perform processing such as filtering and amplification on the received electromagnetic wave, and transmit a processed electromagnetic wave to the modem processor for demodulation. The mobile communication module 112 may further amplify a signal modulated by the modem processor, and convert the signal into an electromagnetic wave through the antenna 1 for radiation. In some embodiments, at least some functional modules of the mobile communication module 112 may be arranged in the processor 111. In some embodiments, at least some functional modules of the mobile communication module 112 may be arranged in a same device as at least some modules of the processor 111.

The wireless communication module 113 may provide a solution to wireless communication including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like applied to the terminal device 110. The wireless communication module 113 may be one or more devices integrating at least one communication processing module. The wireless communication module 113 receives an electromagnetic wave through the antenna 2, performs frequency modulation and filtering on an electromagnetic wave signal, and sends a processed signal to the processor 111. The wireless communication module 113 may further receive a to-be-sent signal from the processor 111, perform frequency modulation and amplification on the to-be-sent signal, and convert the to-be-sent signal into an electromagnetic wave through the antenna 2 for radiation.

In some embodiments, the antenna 1 and the mobile communication module 112 of the terminal device 110 are coupled, and the antenna 2 is coupled to the wireless communication module 113, so that the terminal device 110 can communicate with a network and another device through a wireless communication technology. The wireless communication technology may include technologies such as GSM, GPRS, WCDMA, TD-SCDMA, LTE, FDD, TDD, a 5G NR or 6G system, BT, GNSS, WLAN, NFC, FM, and/or IR. The GNSS may include a global positioning system (global positioning system, GPS), a global navigation satellite system (global navigation satellite system, GLONASS), a Beidou navigation satellite system (beidou navigation satellite system, BDS), a quasi-zenith satellite system (quasi-zenith satellite system, QZSS), and/or a satellite based augmentation system (satellite based augmentation systems, SBAS).

A SIM card of a terminal device supports different mobile networks of various operators. The terminal device may interact with various mobile networks through the SIM card and the mobile communication module 112, to implement mobile call and data communication. For example, the SIM card of the terminal device is a card of Telecom. The terminal device may interact with a network of Telecom through the SIM card and the mobile communication module 112, to implement mobile call and data communication over the network of Telecom.

A SIM card interface 114 is configured to connect to the SIM card. The SIM card may be inserted into the SIM card interface 114 or pulled out from the SIM card interface 114, to implement contact with and separation from the terminal device 110. The terminal device 110 may support 1 or N SIM card interfaces, where N is a positive integer greater than 1. The SIM card interface 114 may support a Nano SIM card, a Micro SIM card, a SIM card, or the like. A plurality of cards may be simultaneously inserted into a same SIM card interface 114. Types of the plurality of cards may be the same or different. The SIM card interface 114 may also be compatible with different types of SIM cards. The SIM card interface 114 may also be compatible with an external memory card. The terminal device 110 interacts with the network of each operator through the SIM card, to implement functions such as a call and data communication.

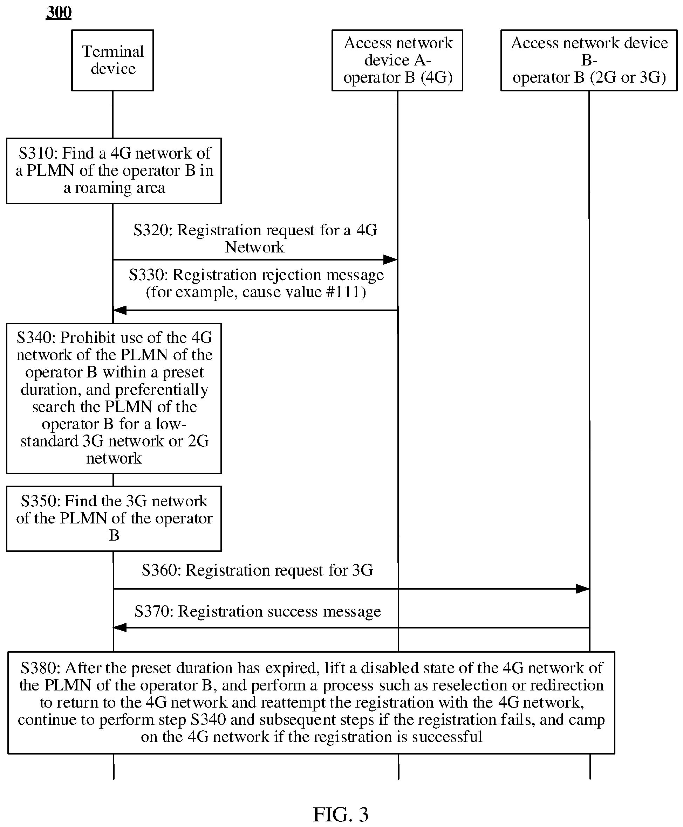

FIG. 3 shows a network registration method in a roaming scenario in the related art according to an embodiment of this application. When roaming to a roaming area, a terminal device needs to access a network of the roaming area in a roaming manner. An operator B is an operator of the roaming area. An access network device A supports a 4G network of the operator B. An access network device B supports a 3G network and a 2G network of the operator B.

Step S310: The terminal device roams to the roaming area, and finds the 4G network on a PLMN of the operator B in the roaming area.

In a roaming scenario, the terminal device searches for networks in descending order of network standards, and preferentially finds the 4G network on the PLMN of the operator B. It should be understood that compared with the 3G network and the 2G network, the 4G network is a high-standard network.

Step S320: The terminal device sends a registration request for the 4G network to the access network device A, to request registration with the 4G network on the PLMN of the operator B.

Step S330: The access network device A sends a registration rejection message to the terminal device in response to the registration request, to indicate that the terminal device has not successfully registered with the 4G network on the PLMN of the operator B. The registration rejection message includes a cause value of a network registration failure.

It should be noted that if the terminal device fails to register with a network, two causes generally exist. One is a network cause, such as a network interruption or a system failure. The other is a user cause, such as network rejection caused by a user not subscribing to a GPRS function, or network rejection caused by the user not signing a roaming protocol. The terminal device determines a cause of the registration failure based on the cause value (cause value) in the registration rejection message fed back by the access network device.

For example, cause values of relatively common user causes are: Cause#7, indicating that a GPRS service is not allowed; and Cause#11, indicating that a PLMN is not allowed. Cause values of relatively common network causes are: Cause#16, indicating that a mobile switching center (mobile switching center, MSC) cannot be accessed temporarily; Cause#17, indicating a network failure (network failure); and Cause#111, indicating a protocol error (protocol error).

In the foregoing step S330, the cause value included in the registration rejection message may be the network registration failure caused by the network causes such as Cause#16, Cause#17, and Cause#111. The terminal device performs step S340 based on the cause value.

Step S340: The terminal device is prohibited from using the 4G network on the PLMN of the operator B within a preset duration (for example, 12 minutes), and preferentially searches the PLMN of the operator B for the low-standard 3G network or 2G network.

The terminal device receives the registration rejection message sent by the access network device A, and can determine a cause for the network registration failure based on the cause value in the registration rejection message. Based on the provisions of the protocol, the terminal device is prohibited from using the 4G network of the operator B within the preset duration (for example, 12 minutes), and preferentially searches the PLMN of the operator B for the 3G or 2G network with a lower network standard than the 4G network.

It should be understood that the preferentially searching the PLMN of the operator B for the low-standard 3G network or 2G network herein indicates that after having not successfully registered with the 4G network on the PLMN of the operator B, the terminal device first searches the PLMN of the operator B for the 3G network or the 2G network, to attempt to register with the 3G network or the 2G network on the PLMN of the operator B. During this time, the terminal device temporarily does not search a PLMN of another operator for a network with any standard. The terminal device is to attempt to search the PLMN of the another operator for a network only when the registration with the 3G or 2G network on the PLMN of the operator B fails or the 3G or 2G network is not found.

Step S350: The terminal device finds the 3G network on the PLMN of the operator B.

Step S360: The terminal device sends a registration request for the 3G network to the access network device B, to request registration with the 3G network on the PLMN of the operator B.

Step S370: The access network device B sends a registration success message to the terminal device.

In this case, it means that the terminal device has successfully registered with the 3G network of the operator B.

Step S380: After the preset duration has expired, the terminal device lifts a disabled state of the 4G network on the PLMN of the operator B, and performs a process such as reselection or redirection to return to the 4G network and reattempt the registration with the 4G network; continues to perform step S340 and subsequent steps to finally register with the 3G network if the registration fails; and camps on the 4G network if the registration succeeds.

It may be seen that in the foregoing roaming scenario, if the terminal device preferentially finds a high-standard network (for example, the 4G network) on a PLMN of a roaming area operator (for example, the operator B), but fails to register with the high-standard network on the PLMN of the roaming area operator, the terminal device suspends use of the high-standard network of the roaming area operator and suspends search of a PLMN of another roaming area operator for a network in response to the received registration rejection message including, for example, the cause value #111, but preferentially searches the PLMN of the roaming area operator for a low-standard network (for example, the 2G network or the 3G network). When the low-standard network is found on the PLMN of the roaming area operator, the terminal device registers with the low-standard network of the roaming area operator in the roaming manner.

However, in the network registration process in the foregoing roaming scenario, if the terminal device supports roaming registration to a high-standard network on a PLMN of another roaming area operator (for example, an operator C), because the terminal device suspends search of a PLMN of another roaming area operator after failing to register with a high-standard network on a PLMN of a roaming area operator (for example, the operator B) and receiving a registration rejection message including, for example, the cause value #111, the terminal device can only register with a low-standard network and cannot register with the high-standard network of the another roaming area operator, resulting in poor user experience.

Based on this, embodiments of this application provide a network registration method in a roaming scenario. When a terminal device fails to register with a high-standard network on a PLMN of a roaming area operator in a roaming area, the terminal device searches a PLMN of another roaming area operator in the roaming area for a high-standard network in response to a received registration rejection message, to attempt to register with the high-standard network. In this way, when the high-standard network exists on the PLMN of the another roaming area operator in the roaming area, the terminal device has more opportunities to preferentially register with the high-standard network, thereby improving user experience.

The network registration method in a roaming scenario in this embodiment of this application may be applied to any roaming scenario. For example, the method may be applied to scenarios such as a terminal device performing initial network access in a roaming area, performing network reselection in the roaming area, and restarting the terminal device to perform re-access to the network in the roaming area.

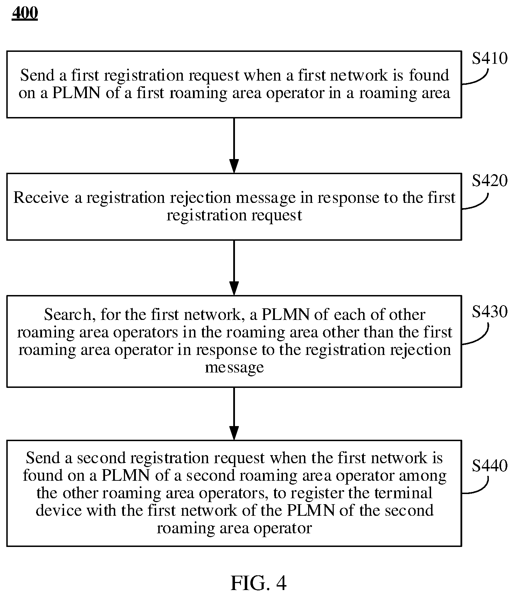

The network registration method in a roaming scenario according to embodiments of this application is described in detail below with reference to FIG. 4 to FIG. 7.

In embodiments of this application, a method 400 is described in detail through an example in which a terminal device performs the method 400. As an example but not a limitation, the method 400 may also be performed by a chip or a processor of a corresponding terminal device.

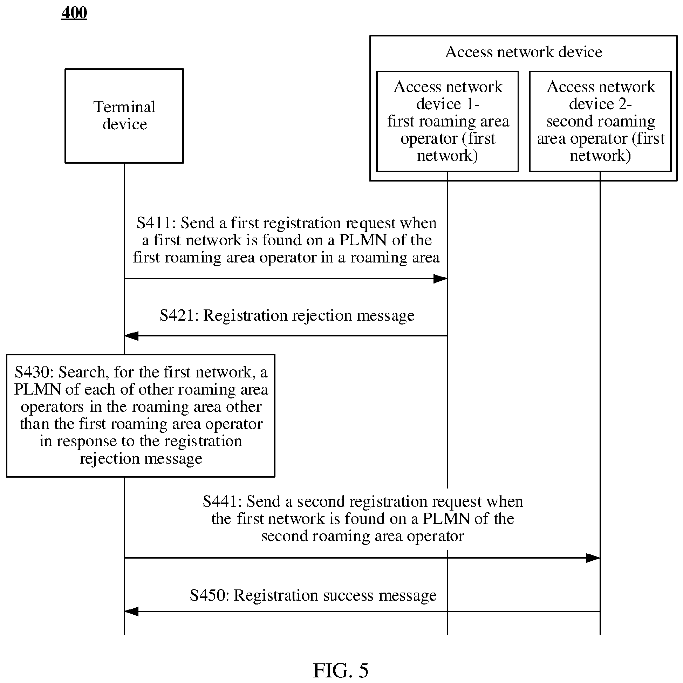

FIG. 4 is an example flowchart of a network registration method 400 in a roaming scenario according to an embodiment of this application. FIG. 5 is a schematic flowchart of inter-device interaction in a network registration method 400 in a roaming scenario according to an embodiment of this application.

Step S410: Send a first registration request when a first network is found on a PLMN of a first roaming area operator in a roaming area, where the first registration request is used for requesting registration with a first network on the PLMN of the first roaming area operator.

In the foregoing step, a terminal device may automatically search for a network or perform a network search based on a network search instruction inputted by a user. If the user is currently located in the roaming area, and the terminal device of the user finds a first network on the PLMN of the first roaming area operator in the roaming area, the terminal device sends the first registration request to an access network device, to request registration with the currently found first network on the PLMN of the first roaming area operator. It should be understood that the first roaming area operator is any operator in the roaming area.

During the network search, the terminal device may search for the network in descending order of network standards. Therefore, the first network found by the terminal device may be regarded as a network with the highest network standard that the terminal device is currently able to (or allowed to) find. For example, the first network is a 4G network. It may be considered that the 4G network is the network with the highest network standard that the terminal device is currently able to find. For a 5G network, the terminal device may not have been able to successfully find the 5G network currently due to a cause such as a previous registration failure or a failure to find a signal. For another example, the first network is a 5G network. It may be considered that the 5G network is the network with the highest network standard that the terminal device is able to find. For another example, the first network is a 3G network. It may be considered that the 3G network is the network with the highest network standard that the terminal device is able to find. For the 4G network or the 5G network, the terminal device may not have been able to successfully find a relevant network currently due to a cause such as a previous registration failure or a failure to find a signal.

It should be understood that when the first roaming area operator includes a plurality of PLMNs, the first network on the PLMN of the first roaming area operator that is found by the terminal device is a first network of any PLMN of the first roaming area operator. No limitations are imposed herein. A specific PLMN found by the terminal device in an actual scenario shall prevail.

Refer to FIG. 5. An example in which an access network device #1 supports a first network of a first roaming area operator is used. For example, in step S411, a terminal device sends a first registration request to the access network device #1 when the first network is found on a PLMN of the first roaming area operator in a roaming area.

In step S420, the terminal device receives a registration rejection message in response to the first registration request. The registration rejection message is used for indicating that the terminal device has not successfully registered with the first network on the PLMN of the first roaming area operator, and used for instructing the terminal device to search the PLMN of the first roaming area operator for a second network with a lower network standard than the first network.

It may be understood that compared with the first network, the second network is a low-standard network, and the first network is a high-standard network.

In the step, the access network device receives the first registration request, and sends the registration rejection message to the terminal device in response to the first registration request, and the terminal device receives the registration rejection message. According to the registration cause message, the terminal device identifies the following two matters. First, the terminal device has not successfully registered with the first network (for example, the 4G network) of the PLMN of the first roaming area operator (for example, China Mobile) with which registration is requested. Second, the terminal device needs to search the PLMN of the first roaming area operator (for example, China Mobile) for the second network (for example, the 3G network or the 2G network) with a lower network standard than the first network (for example, the 4G network).

It should be understood that the registration rejection message indicates that during the period in which the terminal device searches the PLMN of the first roaming area operator for the second network with a lower network standard than the first network, the terminal device does not search a PLMN of another roaming area operator for a network of any network standard.

The registration rejection message includes a cause value for indicating a registration failure. This application imposes no restrictions on specific content of the cause value, as long as the cause value can convey the meaning of "the terminal device has not successfully registered with the first network on the PLMN of the first roaming area operator", and can convey the meaning of "the terminal device searches the PLMN of the first roaming area operator for the second network with a lower network standard than the first network". Generally, the cause value in the registration rejection message of this application represents a cause value of a registration failure caused by a network cause.

For example, the cause value may be any one of the following cause values: a cause value #111, a cause value #16, and a cause value #17. The cause value #111 represents a protocol error (protocol error), the cause value #16 represents that an MSC cannot be accessed temporarily, and the cause value #17 represents a network failure (network failure). These 3 cause values all represent causes for the registration failure caused by the network cause.

For the cause value #111, the terminal device may perform step S430 after a single registration failure. In other words, the terminal device may perform step S430 after receiving a first registration rejection message including the cause value #111.

For the cause value #16 and the cause value #17, a protocol defines that the terminal device may have 5 consecutive opportunities to perform network registration. In other words, as long as the network registration is not successfully performed, the terminal device may initiate 5 registration requests to request registration with a network. Therefore, to follow the protocol to the greatest extent, in embodiments of this application, the terminal device may perform step S430 after sending the registration request a 5^{th} time and having not successfully registered with the network. In other words, the terminal device may perform step S430 after receiving a 5^{th} registration rejection message that includes the cause value #16 or the cause value #17.

Refer to FIG. 5. An example in which the access network device #1 supports the first network of the first roaming area operator is still used. For example, in step S421, the access network device #1 receives the first registration request sent by the terminal device, and then sends the registration rejection message to the terminal device in response to the first registration request.

In step S430, the terminal device searches a PLMN of another roaming area operator in the roaming area other than the first roaming area operator for the first network in response to the registration rejection message.

In the step, upon receiving the registration rejection message sent by the access network device, the terminal device does not search the PLMN of the first roaming area operator (for example, China Mobile) for the second network (for example, the 3G network or the 2G network) with a lower network standard than the first network (for example, the 4G network), as is the case in the prior art, but searches, for the first network (for example, the 4G network), the PLMN of the another roaming area operator (for example, China Unicom, China Telecom, or CBN) in the roaming area other than the first roaming area operator (for example, China Mobile). In this way, the terminal device searches the another roaming area operator for a high-standard first network, so that the terminal device can have more opportunities to access the high-standard first network as early as possible, to improve user experience.

It should be noted that the other roaming area operators herein may be at least one roaming area operator in the roaming area other than the first roaming area operator, but not necessarily all operators in the roaming area other than the first roaming area operator. No limitations are imposed herein. For example, the terminal device roams from abroad to China, where China has 4 roaming area operators, a first roaming area operation is China Mobile, and the another roaming area operator may be at least one of China Unicom, China Telecom, or CBN.

It should be further noted that the terminal device searching the PLMN of the another roaming area operator for the first network indicates that the terminal device can search the PLMN of the another roaming area operator for the first network, and the terminal device may not necessarily perform an exhaustive search on each of the other roaming area operators. For example, the other roaming area operators include 3 roaming area operators. During a network search, the terminal device first searches one of the roaming area operators and successfully registers with a first network, and then the terminal device does not need to continue the search of the other 2 roaming area operators for the first network.

It should be understood that during a period when the terminal device searches the PLMN of the another roaming area operator for the first network, the terminal device does not search the PLMN of the first roaming area operator for a network with any standard, and may search for the low-standard network on the PLMN of the first roaming area operator only when the first network is not found on the PLMN of the another roaming area operator or registration with the first network fails.

In step S440, the terminal device sends a second registration request when the first network is found on a PLMN of a second roaming area operator among the other roaming area operators, to register the terminal device with the first network on the PLMN of the second roaming area operator.

In other words, the terminal device finds a high-standard first network on the PLMN of the second roaming area operator, and then the terminal device sends a second registration request to the access network device to register the terminal device with the first network on the PLMN of the second roaming area operator. When the terminal device successfully registers, the access network device sends a registration success message to the terminal device to indicate that the terminal device has successfully registered with the first network on the PLMN of the second roaming area operator, and then the terminal device may perform communication on the first network on the PLMN of the second roaming area operator. The second roaming area operator is any operator in the roaming area other than the first roaming area operator.

In an example, the second roaming area operator and the first roaming area operator may jointly construct and share a same access network device, for example, the access network device 123 shown in FIG. 1. The second roaming area operator and the first roaming area operator may share a first network of the same access network device. In the example, the terminal device sends the first registration request and the second registration request to the same access network device.

In another example, the second roaming area operator and the first roaming area operator respectively use different access network devices. Refer to FIG. 5. An example in which the access network device #1 supports the first network of the first roaming area operator and the access network device #2 supports the first network of the second roaming area operator is used. In step S441, the terminal device sends the second registration request to the access network device #2, to request registration with the first network on the PLMN of the second roaming area operator. When the terminal device successfully registers, in step S450, the access network device #2 sends the registration success message to the terminal device to indicate that the terminal device has successfully registered with the first network on the PLMN of the second roaming area operator. Afterwards, the terminal device may perform communication on the first network on the PLMN of the second roaming area operator.

It should be understood that when the second roaming area operator includes a plurality of PLMNs, the first network on the PLMN of the second roaming area operator that is found by the terminal device is a first network of any PLMN of the second roaming area operator. No limitations are imposed herein. A specific PLMN found by the terminal device in an actual scenario shall prevail.

In a specific example, a home operator of the terminal device is TMO of Deutsche Telekom AG. Users of the terminal device range from Germany to China. 4 operators (China Mobile, China Unicom, China Telecom, and CBN) of China are roaming area operators of the terminal device. After being turned on, the terminal device finds a 4G network (an example of the first network) of a PLMN of China Mobile (an example of the first roaming area operator), and sends a registration request to request registration with the 4G network on the PLMN of China Mobile. After the terminal device fails to register with the 4G network of China Mobile and receives a registration rejection message including, for example, the cause value #111, the terminal device stops searching the PLMN of China Mobile for the 4G network, and does not search the PLMN of China Mobile for the 3G network or the 2G network, as is the case in the prior art, but searches a PLMN of at least one operator of China Unicom, China Telecom, or CBN for a 4G network, and sends a registration request to register the terminal device with the 4G network of China Telecom after finding the 4G network on the PLMN of China Telecom.

In the network registration method in a roaming scenario provided above, for example, when the terminal device fails to register with the high-standard first network (for example, the 4G network) of the PLMN of the first roaming area operator (for example, China Mobile), and receives the registration rejection message instructing to search the PLMN of the first roaming area operator for the second network (for example, the 3G network or the 2G network) with the lower network standard than the first network, the terminal device searches, for the first network, the PLMN of the another roaming area operator in the roaming area other than the first roaming area operator in response to the registration rejection message. In this way, when the high-standard first network is found on the PLMN of the second roaming area operator (for example, China Telecom) among the other roaming area operators, the terminal device sends the registration request to request registration with the high-standard first network, so that the terminal device has more opportunities to preferentially register with the high-standard first network, thereby avoiding a problem of poor user experience in the related art as a result of the terminal device searching the PLMN of the first roaming area operator for a low-standard second network and finally registering with the low-standard second network, and effectively improving user experience.

In some embodiments, when the terminal device has not successfully registered with the first network on the PLMN of the second roaming area operator, the terminal device searches the PLMN of the at least one roaming area operator in the roaming area for the second network with the lower network standard than the first network. In other words, when the terminal device has not successfully registered, the terminal device searches the PLMN of the at least one roaming area operator in the roaming area for the low-standard second network.

It should be noted that the at least one roaming area operator in the roaming area herein may be some or all operators in the roaming area. No limitations are imposed. The at least one roaming area operator in the roaming area may include the first roaming area operator, or may not include the first roaming area operator. No limitations are imposed either. The explanation of "the at least one roaming area operator in the roaming area" in the following similar description of "searching the PLMN of the at least one roaming area operator in the roaming area for the second network with a lower network standard than the first network (or searching for the second network with a lower standard)" is the same as that herein. Details are not described subsequently again.

It should be further noted that the terminal device searching the PLMN of the at least one roaming area operator in the roaming area for the second network indicates that the terminal device can search the PLMN of the at least one roaming area operator for the second network, and the terminal device may not necessarily perform an exhaustive search on each of the at least one roaming area operator. For example, the at least one roaming area operator includes 3 roaming area operators. During a network search, the terminal device first searches one of the roaming area operators and successfully registers with a second network, and then the terminal device does not need to continue the search of the other 2 roaming area operators for the second network. The explanation of the similar description below is the same as that herein. Details are not described again.

For a process in which the terminal device searches the PLMN of the at least one roaming area operator for the second network with a lower network standard than the first network, two possible implementations are described through examples.

### Implementation 1

In some embodiments, an operator is prioritized. For a roaming area operator, the terminal device attempts to search for second networks of all network standards on the PLMN of the roaming area operator in descending order of network standards, initiates a registration request to request network registration when finding a second network of any network standard, no longer searches for a network of another network standard when having registered successfully, continues to search for a network of another network standard when having not successfully registered, and attempts to search a PLMN of another roaming area operator for the second networks of all network standards when having not found the second networks of all network standards on the PLMN of the roaming area operator, until the second network of any network standard is found on the PLMN of any one roaming area operator.

Assuming that the first network is a 4G network, when the terminal device fails to register with a PLMN of China Mobile and a first preset duration has expired, the terminal device may search PLMNs of China Mobile, China Unicom, China Telecom, and CBN for a 3G network or a 2G network with a lower network standard than the 4G network. 3G and 2G herein may be considered as two network standards of the second network. During the search for the 3G network or the 2G network, the terminal device first searches the PLMN of China Mobile for the 3G network, initiates a registration request for the 3G network to request registration with the 3G network if the 3G network is found, and no longer searches for the 2G network of China Mobile when having registered successfully. When having not successfully registered or the 3G network of China Mobile is not found, the terminal device continues to search the PLMN of China Mobile for the 2G network. Similarly, if the 2G network is found, a registration request for the 2G network is initiated to request registration with the 2G network. When the registration succeeds, a network of another roaming area operator is no longer searched. When the registration fails or the 2G network of China Mobile is not found, the PLMN of another roaming area operator (for example, China Unicom) is searched for the 3G network or the 2G network in descending sequence of network standards, until the 3G network or the 2G network is found on the PLMN of any one roaming area operator.

### Implementation 2

In some other embodiments, a network standard is prioritized. For a network standard, the terminal device attempts to search for a second network of the network standard on a PLMN of each roaming area operator, initiates a registration request to request network registration when finding the second network of the network standard on the PLMN of any one roaming area operator, no longer searches for the second network of the network standard of another roaming area operator when having registered successfully, and continues to search for the second network of the network standard of the another roaming area operator when having not successfully registered. When the second network of the network standard is not found on the PLMN of any one roaming area operator, for another network standard, an attempt is made to search the PLMN of each roaming area operator for a second network of the another network standard, until the second network of any network standard is found on the PLMN of any one roaming area operator.

Assuming that the first network is a 4G network, when the terminal device fails to register with a PLMN of China Mobile and a first preset duration has expired, the terminal device may search PLMNs of China Mobile, China Unicom, China Telecom, and CBN for a 3G network or a 2G network with a lower network standard than the 4G network. 3G and 2G herein may be considered as two network standards of the second network. During the search for the 3G network or the 2G network, the 3G network is searched preferentially. The terminal device searches the PLMN of China Mobile for the 3G network. If the 3G network is found, the terminal device initiates a registration request for the 3G network to request registration with the 3G network, and no longer searches for 3G networks of China Unicom, China Telecom, and CBN when having registered successfully. If the registration fails or the 3G network of China Mobile is not found, the terminal device searches the PLMNs of China Unicom, China Telecom, and CBN for the 3G network, until the 3G network is found on the PLMN of any one roaming area operator and the registration succeeds, and starts to search the PLMNs of China Unicom, China Telecom, and CBN for the 2G network if the 3G network is not found on the PLMN of any one roaming area operator, until the 2G network is found on the PLMN of any one roaming area operator.

For example, in the foregoing step of searching the PLMN of the at least one roaming area operator in the roaming area for the second network with the lower network standard than the first network by the terminal device, the terminal device preferentially searches the PLMN of the first roaming area operator for the second network with the lower network standard than the first network. It may be understood that the at least one roaming area operator includes the first roaming area operator.

In the embodiment, during the search for a low-standard second network by the terminal device, the terminal device preferentially searches, for the second network, the PLMN of the first roaming area operator of the first network that has been found previously. When the second network is found on the PLMN of the first roaming area operator, the terminal device initiates a registration request to attempt to register with the second network. When the second network is not found on the PLMN of the first roaming area operator, the terminal device may continue to search a PLMN of another roaming area operator for the second network. In this way, the process of searching for the low-standard second network may comply with an existing protocol as much as possible, and changes to the protocol are reduced, thereby achieving the purpose of simplifying the design.

The terminal device preferentially searches the PLMN of the first roaming area operator for the second network. In an example, for the foregoing implementation 1, it may be understood that the terminal device preferentially attempts to search the PLMN of the first roaming area operator for second networks of all network standards. In another example, for the foregoing implementation 2, it may be understood that during the search of a PLMN of at least one roaming area operator for a second network of a same network standard, the terminal device preferentially attempts to search the PLMN of the first roaming area operator for the second network of the network standard.

In some embodiments, when the first network is not found on a PLMN of at least a part of the other roaming area operators, the PLMN of the at least one roaming area operator in the roaming area is searched for the second network with the lower network standard than the first network.

In other words, when the terminal device has not found the first network, the terminal device searches the PLMN of the at least one roaming area operator in the roaming area for the low-standard second network.

It should be understood that at least a part of the roaming area operators herein represents some or all of the other roaming area operators. Due to problems such as some restrictions (for example, a time limit specified in a method 600 below) or networks, the terminal device may not necessarily complete the search across all other roaming area operators. Therefore, the terminal device may search for a portion of the roaming area operators and then search for the low-standard second network.

For the specific description that the terminal device searches the PLMN of the at least one roaming area operator in the roaming area for the second network with a lower network standard than the first network, reference may be made to the relevant description above. Details are not described again.

In some embodiments, the registration rejection message is further used for indicating that the terminal device is prohibited from using the first network on the PLMN of the first roaming area operator within a second preset duration. In addition, in the foregoing step S430, that is, the step of searching the PLMN of another roaming area operator for the first network in response to the registration rejection message, in response to the registration rejection message, the terminal device is prohibited from using the first network on the PLMN of the first roaming area operator within the second preset duration, and searches the PLMN of the another roaming area operator for the first network.

The second preset duration may be any duration. No limitations are imposed herein. For example, the second preset duration is less than or equal to 15 min. For example, the second preset duration may be 14 min, 13 min, 12 min, 10 min, 9 min, 8 min, 7 min, or the like.

Since the registration with the first network on the PLMN of the first roaming area operator fails, to avoid the problem that the terminal device fails to access the network for an extended period due to a plurality of unsuccessful attempts to register with the first network on the PLMN of the first roaming area operator by the terminal device within a short time period, a second preset duration is defined to prohibit the terminal device from using the first network on the PLMN of the first roaming area operator within the second preset duration, and during the period when the first network on the PLMN of the first roaming area operator is disabled, the PLMNs of the other roaming area operators are preferentially searched for the first network.

In the foregoing embodiment, after the second preset duration has expired, the terminal device lifts the disabled state of the first network on the PLMN of the first roaming area operator. In this way, the terminal device may perform a process such as reselection or redirection to return to the first network and reattempt the registration with the first network, continue to perform step S430 and subsequent steps if the registration fails, and camp on the first network if the registration succeeds. In this way, if the terminal device finally has not successfully registered with the first network, the terminal device still has a chance to return to the high-standard first network again to attempt to register with the first network after the disabled state of the first network on the PLMN of the first roaming area operator is lifted, thereby improving user experience as much as possible.

In the foregoing embodiment, a timer (defined as a second timer) may be set. The second preset duration is controlled through the timer.

For example, in response to the registration rejection message, the terminal device starts the second timer, and is prohibited from using the first network on the PLMN of the first roaming area within a duration of the second timer. The duration of the second timer is a second preset duration. The terminal device searches a PLMN of another roaming area operator for the first network. In addition, after the second timer has expired, the terminal device lifts the disabled state of the first network on the PLMN of the first roaming area operator.

It should be noted that when the first roaming area operator includes a plurality of PLMNs, in step S410, regardless of which PLMN of the first roaming area operator the terminal device searches for the first network, upon receiving the registration rejection message, the terminal device prohibits the use of the first network on all PLMNs of the first roaming area operator.

In some embodiments, in the foregoing step S430, that is, in the step of searching, for the first network, the PLMN of the another roaming area operator in response to the registration rejection message, the terminal device searches the PLMN of the another roaming area operator for the first network within the first preset duration in response to the registration rejection message.

For example, the first preset duration is less than or equal to 2 min. For example, the first preset duration may be 2 min, 1.5 min, 1 min, 0.5 min, or the like.

In embodiments of this application, first preset durations of different durations may be set for first networks of different network standards. For the first preset durations of the first networks of different network standards, no specific limitations are imposed, and may be flexibly set based on an actual situation. For example, for a 5G network, a duration of the first preset duration is a duration 1. For a 4G network, the first preset duration is a duration 2. For a 3G network, the first preset duration is a duration 3. The duration 1, the duration 2, and the duration 3 are all different.

In some embodiments, generally, a network with a higher network standard has more frequency points, and a search for these networks needs to take a longer time. Therefore, to enable the terminal device to find a high-standard network much as possible, a higher network standard of the first network indicates a longer duration set for the first preset duration. For example, the duration of the first preset duration for the 5G network is greater than the duration of the first preset duration for the 4G network.

In the foregoing embodiment, the first preset duration is set, and the search of the PLMN of the another roaming area operator for the first network is limited within the first preset duration. This may avoid a problem that the terminal device cannot access a network for an extended period due to prolonged continuous searching for the first network, thereby further improving user experience.

In the foregoing embodiment, a timer (defined as a first timer) may be set. The first preset duration is controlled through the timer.

For example, the terminal device starts the first timer in response to the registration rejection message. A duration of the first timer is the first preset duration. The terminal device searches a PLMN of another roaming area operator for the first network within the duration of the first timer.

Based on the foregoing second preset duration for limiting the first network on the PLMN of the first roaming area operator, in some embodiments, in response to the registration rejection message, the terminal device is prohibited from using the first network on the PLMN of the first roaming area operator within the second preset duration, and searches the PLMN of the another roaming area operator for the first network within the first preset duration, where the first preset duration is less than the second preset duration.

In other words, within the second preset duration for which the use of the first network in the PLMN of the first roaming area operator is prohibited, the terminal device searches the PLMN of another roaming area operator for the first network within the first preset duration. After the first preset duration has expired, regardless of a state (successful registration with the first network, or unsuccessful registration with the first network, or not finding the first network) of the terminal device, the terminal device stops searching the PLMN of any one of the other roaming area operators for the first network. In addition, since the second preset duration has not expired, the terminal device is still prohibited from using the first network on the PLMN of the first roaming area operator.

For example, the second preset duration is 12 min, and the first preset duration is less than or equal to 2 min. For example, the first preset duration may be 2 min, 1.5 min, 1 min, 0.5 min, or the like.

With reference to the first timer and the second timer defined above, for example, in response to the registration rejection message, the terminal device starts the second timer, and is prohibited from using the first network on the PLMN of the first roaming area within the duration of the second timer; and starts the first timer, and searches the PLMN of the another roaming area operator for the first network within the duration of the first timer. The duration of the first timer is the first preset duration, the duration of the second timer is the second preset duration, and the first preset duration is less than the second preset duration.

It should be understood that the steps of starting the second timer and starting the first timer by the terminal device may be performed simultaneously. Alternatively, the second timer may be started first, and then the first timer is started. No limitations are imposed herein.

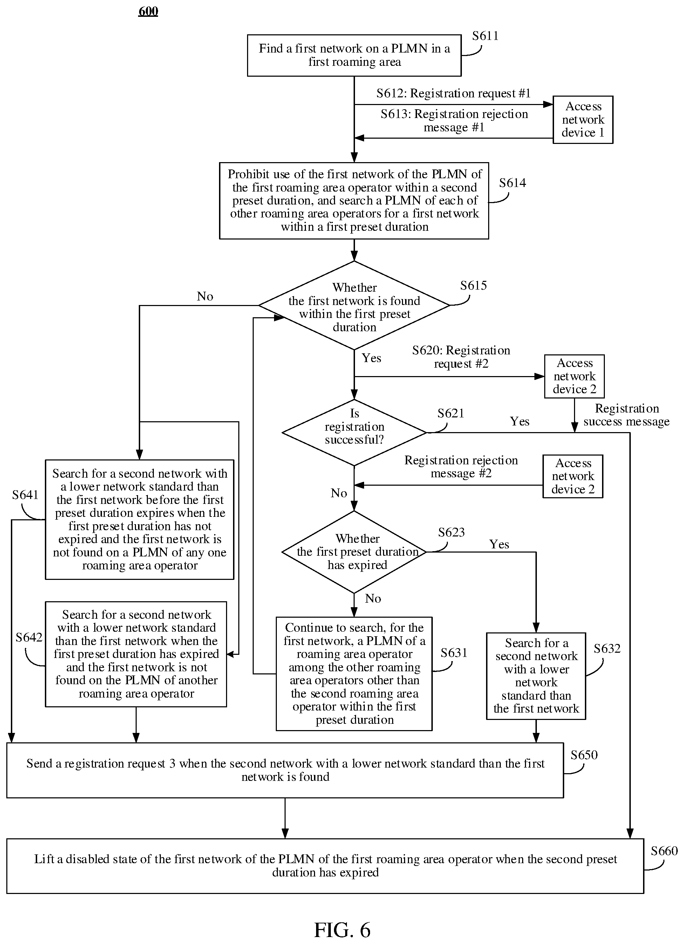

FIG. 6 is a schematic flowchart of a network registration method 600 in a roaming scenario according to an embodiment of this application. In the method 600, based on the first preset duration and the second preset duration, various cases in which a terminal device searches for a network are described in detail.

Step S611: The terminal device finds a first network on a PLMN of a first roaming area.

Step S612: A registration request #1 is sent to an access network device 1 when the first network is found on the PLMN of the first roaming area operator, where the registration request #1 is used for requesting registration with the first network on the PLMN of the first roaming area operator.

The registration request #1 herein may correspond to the first registration request above.

Step S613: The access network device 1 sends a registration rejection message #1 in response to the registration request #1, and the terminal device receives the registration rejection message #1.

The registration rejection message #1 is used for indicating that the terminal device has not successfully registered with the first network on the PLMN of the first roaming area operator, and used for instructing the terminal device to search the PLMN of the first roaming area operator for a second network with a lower network standard than the first network. For example, the registration rejection message #1 includes a cause value #111, a cause value #16, or a cause value #17.

Step S614: In response to the registration rejection message #1, the terminal device is prohibited from using the first network on the PLMN of the first roaming area operator within the second preset duration, and searches a PLMN of another roaming area operator for the first network within the first preset duration.

Step S615: The terminal device determines whether the first network is found within the first preset duration.

Alternatively, the terminal device determines whether a 4G network is found before the first preset duration expires.

When the first network is found within the first preset duration, the terminal device performs step S620.

When the first network is not found within the first preset duration, two cases may exist. The terminal device may select one of the two cases for execution. In a first case, the terminal device performs step S641, or in a second case, the terminal device performs step S642, with the purpose of searching for a second network with a lower network standard than the first network when the first network is not found.

In step S620, the terminal device sends a registration request #2 to an access network device 2 when the terminal device finds the first network on a PLMN of a second roaming area operator among other roaming area operators, where the registration request #2 is used for requesting to register with the first network on the PLMN of the second roaming area operator.

The registration request #2 herein may correspond to the second registration request above.

It should be understood that the access network device 1 and the access network device 2 may be a same device, or may be different devices. This mainly depends on whether the first roaming area operator and the second roaming area operator share the same access network device. When the first roaming area operator and the second roaming area operator share the same access network device, the access network device 1 and the access network device 2 may be a same device, and the terminal device sends the registration request #1 and the registration request #2 to the same access network device. When the first roaming area operator and the second roaming area operator do not share the same access network device, different access network devices support respective roaming area operators. The access network device 1 and the access network device 2 are different devices. The terminal device sends the registration request #1 and the registration request #2 to the access network device 1 and the access network device 2 respectively supported by the first roaming area operator and the second roaming area operator.

In step S621, the terminal device determines whether the registration succeeds.

In the step, the terminal device determines whether the terminal device has successfully registered with the first network on the PLMN of the second roaming area operator.

When the terminal device has successfully registered, the terminal device performs communication through the first network of the second roaming area operator, until the second preset duration expires, and performs step S660.

When the terminal device has not successfully registered, step S623, step S631, or step S632 is performed, with the purpose of determining whether the first preset duration expires, and different steps are performed when a timeout occurs or does not occur.

The terminal device determines, based on a message fed back by the access network device, whether the terminal device has successfully registered. The terminal device receives a registration rejection message #2 for the registration request #2, which means that the registration is unsuccessful. The terminal device receives a registration success message for the registration request #2d, which means that the registration succeeds.

In step S623, the terminal device determines whether the first preset duration expires when the terminal device has not successfully registered with the first network on the PLMN of the second roaming area operator.

When the first preset duration expires, the terminal device performs step S632. When the first preset duration has not expired, the terminal device performs step S631.

In step S631, the terminal device still searches, for the first network, a PLMN of a roaming area operator among the other roaming area operators other than the second roaming area operator within the first preset duration when the terminal device has not successfully registered with the first network on the PLMN of the second roaming area operator and the first preset duration has not expired.

In the step, during the search for the first network, step S615 and subsequent related steps are repeatedly performed to attempt to register with a high-standard first network or a low-standard second network.

Specifically, within the first preset duration, the terminal device initiates a new registration request when finding the first network on a PLMN of a roaming area operator such as a third roaming area operator among the other roaming area operators other than the second roaming area operator, and uses the first network on the PLMN of the third roaming area operator to perform communication when having successfully registered. When having not successfully registered with the first network on the PLMN of the third roaming area operator and the first preset duration has not expired, the terminal device continues to search, for the first network, a PLMN of a roaming area operator among the other roaming area operators other than the second roaming area operator and the third roaming area operator, until the first network is found within the first preset duration or the low-standard second network is searched after the first preset duration expires.

Certainly, if only the first roaming area operator exists among the other roaming area operators, and no another roaming area operator exists, the step is skipped. The terminal device directly searches for the low-standard second network.

In the foregoing embodiment, when the terminal device has not successfully registered with the first network on the PLMN of the second roaming area operator and the first preset duration has not expired, the terminal device still searches, for the first network, the PLMN of the roaming area operator among the other roaming area operators other than the second roaming area operator within the first preset duration. This can increase the chance for the terminal device to find the first network, thereby increasing the chance of registering with the first network and improving user experience.

In step S632, when the terminal device has not successfully registered with the first network on the PLMN of the second roaming area operator and the first preset duration has expired, the terminal device searches the PLMN of the at least one roaming area operator in the roaming area for the second network with the lower network standard than the first network.

In other words, when the first preset duration has expired, and the terminal device has not successfully registered with the first network on the PLMN of the second roaming area operator, to enable the terminal device to access the network as soon as possible, the terminal device no longer searches for the first network, but searches the PLMN of the at least one roaming area operator in the roaming area for the low-standard second network, to register with the second network. When the low-standard second network is found, step S650 is performed to register with the low-standard second network. It may be understood that this case means that the terminal device has spent a period of time in finding the first network of the second roaming area operator. It is highly probable that the terminal device has not found the first network on the PLMN of the roaming area operator other than the second roaming area operator. Therefore, a search for the low-standard second network after the first preset duration has expired can increase a probability that the terminal device accesses the network as soon as possible.

In some embodiments, in the foregoing step of searching the PLMN of the at least one roaming area operator in the roaming area for the second network with the lower network standard than the first network by the terminal device, the terminal device preferentially searches the PLMN of the first roaming area operator for the second network with the lower network standard than the first network.

For the specific description that the terminal device searches the PLMN of the at least one roaming area operator in the roaming area for the second network with a lower network standard than the first network, reference may be made to the relevant description above. Details are not described again.

In step S641, the terminal device searches the PLMN of the at least one roaming area operator in the roaming area for the second network with the lower network standard than the first network before the first preset duration expires when the first preset duration has not expired and the first network is not found on a PLMN of any one of the other roaming area operators.

In other words, the terminal device has traversed all roaming area operators among the other roaming area operators before the first preset duration expires. A result of the traversal is that the first network is not found on the PLMN of any one roaming area operator. In this case, the terminal device does not need to wait for the first preset duration to end before searching for the low-standard second network, but ends a search duration (that is, the first preset duration) in advance. Before the first preset duration expires, the terminal device searches the PLMN of the at least one roaming area operator in the roaming area for the low-standard second network in advance. In this way, when it has been identified that the first network is not found on the PLMNs of the other roaming area operators, a search duration is ended in advance to search the PLMN of the at least one roaming area operator in the roaming area for the low-standard second network in advance, thereby reducing an unnecessary search duration, so that the terminal device searches for another network as soon as possible to access a network as early as possible, and improving user experience.

It should be understood that "the first preset duration has not expired" indicates that an end time has not exceeded the first preset duration, and "before the first preset duration expires" indicates a time before the end time that has exceeded the first preset duration.

In some embodiments, in the foregoing step of searching the PLMN of the at least one roaming area operator in the roaming area for the second network with the lower network standard than the first network by the terminal device, the terminal device preferentially searches the PLMN of the first roaming area operator for the second network with the lower network standard than the first network.

For the specific description that the terminal device searches the PLMN of the at least one roaming area operator in the roaming area for the second network with a lower network standard than the first network, reference may be made to the relevant description above. Details are not described again.

Based on the first timer defined above for the first preset duration, during implementation, the terminal device starts the first timer, and searches the PLMNs of the other roaming area operators for a first network within a duration of the first timer. When the first timer has not expired and the first network is not found on the PLMN of any one of the other roaming area operators, the terminal device turns off the first timer in advance. After the first timer is turned off, the terminal device searches the PLMN of at least one roaming area operator in the roaming area for the second network with a lower network standard than the first network.

It should be understood that the first timer being turned off in advance described herein means that the timer is turned off before the first timer expires. In this way, after turning off the first timer, the terminal device may search for the low-standard second network in advance before the first preset duration expires.

In step S642, the terminal device searches the PLMN of the at least one roaming area operator in the roaming area for the second network with the lower network standard than the first network when the first preset duration has expired and the first network is not found on the PLMN of the another roaming area operator.

In the step, when the first preset duration has expired, the terminal device has not found the first network on the PLMNs of the other roaming area operators, but the first preset duration has expired. In this case, the terminal device no longer searches for the first network, but searches the PLMN of the at least one roaming area operator in the roaming area for the low-standard second network.

In some embodiments, in the foregoing step of searching the PLMN of the at least one roaming area operator in the roaming area for the second network with the lower network standard than the first network by the terminal device, the terminal device preferentially searches the PLMN of the first roaming area operator for the second network with the lower network standard than the first network.

For the specific description that the terminal device searches the PLMN of the at least one roaming area operator in the roaming area for the second network with a lower network standard than the first network, reference may be made to the relevant description above. Details are not described again.

In step S650, the terminal device sends a registration request #3 when the terminal device finds the second network with a lower network standard than the first network on the PLMN of any one roaming area operator, to request to register the terminal device with the second network on the PLMN of the roaming area operator.

It should be understood that any one roaming area operator herein is any one roaming area operator among the at least one roaming area operator. In an embodiment in which the terminal device preferentially searches the PLMN of the first roaming area operator for the second network, if the terminal device finds the second network on the PLMN of the first roaming area operator, the any one roaming area operator is the first roaming area operator.

In step S660, the terminal device releases the disabled state of the first network on the PLMN of the first roaming area operator when the second preset duration has expired.

In this way, after the disabled state of the first network on the PLMN of the first roaming area operator is released, the terminal device may return to the first network by performing a process such as reselection or redirection to research for and attempt to register with the first network. If the registration fails, the terminal device continues to search for the first network or searches for the second network to access the network as much as possible. If the registration succeeds, the terminal device camps on the first network. In this way, if the terminal device finally has not successfully registered with the first network, the terminal device still has a chance to return to the high-standard first network again to attempt to register with the first network after the disabled state of the first network on the PLMN of the first roaming area operator is lifted, thereby improving user experience as much as possible.

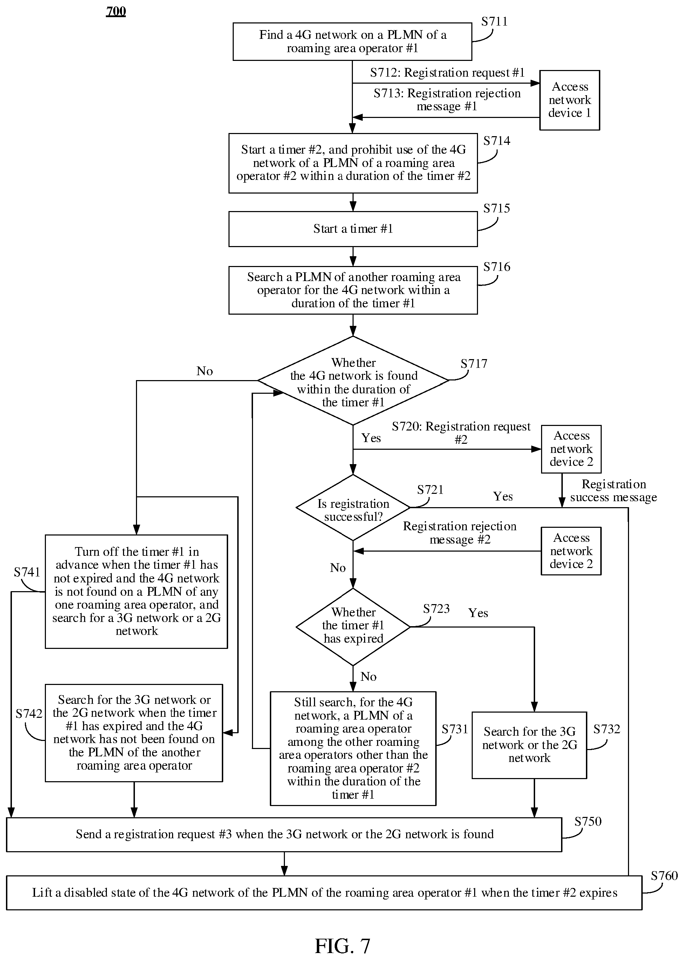

FIG. 7 is a schematic flowchart of a network registration method 700 in a roaming scenario according to an embodiment of this application.

In the method 700, a specific embodiment is illustrated by using an example in which a first network is a 4G network and a second network is a 3G network or a 2G network, and by using an example in which a roaming area operator #1 is an example of a first roaming area operator, a roaming area operator #2 is an example of a second roaming area operator, a timer #1 is an example of a first timer, and a timer #2 is an example of a second timer. With reference to the foregoing description, similar or same content in the method 700 is briefly described. Details are not described again.

In the method 700, in a roaming scenario, a terminal device is located in a roaming area, and turned on to search for a network to search a PLMN of a roaming area operator in the roaming area for a network.

Step S711: The terminal device finds the 4G network on a PLMN of the roaming area operator #1.

Step S712: A registration request #1 is sent to an access network device 1 when the 4G network is found on the PLMN of the roaming area operator #1, where the registration request #1 is used for requesting registration with the 4G network on the PLMN of the roaming area operator #1.

Step S713: The access network device 1 sends a registration rejection message #1 in response to the registration request #1, and the terminal device receives the registration rejection message #1.

Step S714: The terminal device starts a timer #2, and is prohibited from using the 4G network of a PLMN of the roaming area operator #2 within a duration of the timer #2. The duration of the timer #2 is a second preset duration.

Step S715: The terminal device starts the timer #1. A duration of the timer #1 is a first preset duration. The first preset duration is less than the second preset duration.

In the foregoing steps, no limitations are imposed on an order of step S714 and step S715. Step S714 and step S715 may be performed simultaneously. To be specific, the terminal device may start the timer #2 and the timer #1 simultaneously. Alternatively, step S714 may be performed before step S715. To be specific, the terminal device starts the timer #2, and then starts the timer #1.

Step S716: The terminal device searches a PLMN of another roaming area operator for the 4G network within the duration of the timer #1.

Step S717: The terminal device determines whether the 4G network is found within the duration of the timer #1.

Alternatively, the terminal device determines whether the 4G network is found before the timer #1 expires.

When the 4G network is found within the duration of the timer #1, the terminal device performs step S720. When the 4G network is not found within the duration of the timer #1, the terminal device performs step S741 or step S742, with the purpose of searching for a 3G network or a 2G network with a lower network standard than the 4G network when the 4G network is not found.

In step S720, the terminal device sends a registration request #2 to an access network device 2 when the terminal device finds the 4G network on the PLMN of the roaming area operator #2 among other roaming area operators, where the registration request #2 is used for requesting to register with the 4G network on the PLMN of the roaming area operator #2.

In step S721, the terminal device determines whether the registration succeeds.

It should be understood that, that the terminal device determines whether the registration succeeds means determining whether the terminal device has successfully registered with the 4G network on the PLMN of the roaming area operator #2.

When the terminal device has successfully registered, the terminal device performs communication through the 4G network of the roaming area operator #2, until the timer #2 expires, and performs step S760.

When the terminal device has not successfully registered, step S723, step S731, or step S732 is performed, with the purpose of determining whether the timer #1 expires, and different steps are performed when a timeout occurs or does not occur.

The terminal device determines, based on a message fed back by the access network device, whether the terminal device has successfully registered. The terminal device receives a registration rejection message #2, which means that the registration is unsuccessful. The terminal device receives a registration success message, which means that the registration succeeds.

In step S723, the terminal device determines whether the timer #1 has expired.

When the timer #1 expires, the terminal device performs step S732. When the timer #1 has not expired, the terminal device performs step S731.

In step S731, the terminal device still searches, for the 4G network, a PLMN of a roaming area operator among the other roaming area operators other than the roaming area operator #2 within the duration of the timer #1 when the terminal device has not successfully registered with the 4G network on the PLMN of the roaming area operator #2 and the timer #1 has not expired.

During the search for the 4G network, step S717 and subsequent related steps are repeatedly performed. Finally, an attempt is made to register with a high-standard 4G network, or an attempt is made to register with a low-standard 3G network or 2G network. For a specific description of the step, reference may be made to the relevant description of step S631 in the method 600. Details are not described again.

In step S732, when the terminal device has not successfully registered with the 4G network on the PLMN of the roaming area operator #2 and the timer #1 has expired, the terminal device searches the PLMN of the at least one roaming area operator in the roaming area for the 3G network or the 2G network.

For a specific description of the step, reference may be made to the relevant description of step S632 in the method 600. Details are not described again.

In step S741, when the timer #1 has not expired and the 4G network is not found on the PLMN of any one of the other roaming area operators, the timer #1 is turned off in advance, and after the timer #1 is turned off, the terminal device searches the PLMN of the at least one roaming area operator in the roaming area for the 3G network or the 2G network.

It should be understood that the timer #1 being turned off in advance described herein indicates that the timer is turned off before the timer #1 expires. In this way, after turning off the timer #1, the terminal device may search for the 3G network or the 2G network in advance before the first preset duration expires.

For a specific description of the step, reference may be made to the relevant description of step S641 in the method 600. Details are not described again.

In step S742, when the timer #1 has not expired and the 4G network is not found on the PLMN of each of the other roaming area operators, the terminal device searches the PLMN of the at least one roaming area operator in the roaming area for the 3G network or the 2G network.

For a specific description of the step, reference may be made to the relevant description of step S642 in the method 600. Details are not described again.

In step S750, the terminal device sends a registration request #3 when the terminal device finds the 3G network or the 2G network on the PLMN of any one roaming area operator, to request to register the terminal device with the 3G network or the 2G network on the PLMN of the roaming area operator.

It should be understood that any one roaming area operator herein is any one roaming area operator among the at least one roaming area operator. In an embodiment in which the terminal device preferentially searches the PLMN of the roaming area operator #1 for the low-standard network, if the terminal device finds the 3G network or the 2G network on the PLMN of the roaming area operator #1, the any one roaming area operator is the roaming area operator #1.

In step S760, the terminal device releases the disabled state of the 4G network on the PLMN of the roaming area operator #1 when the timer #2 has expired.

It should be noted again that the sequence numbers of the steps in the foregoing method embodiments do not mean the order of execution, and the order of execution of each process should be determined by its function and internal logic, and should not constitute any limitation on the implementation process of embodiments of this application.

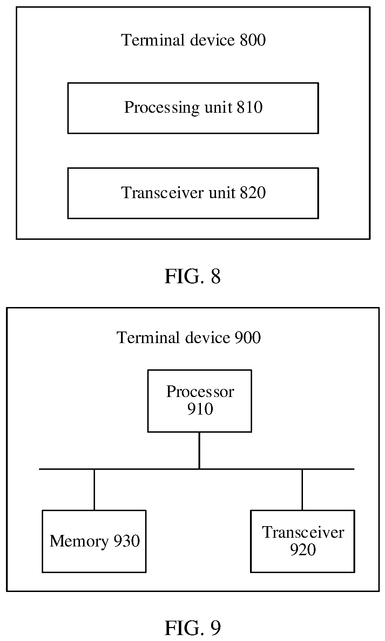

The network registration method in a roaming scenario provided in embodiments of this application is described in detail above with reference to FIG. 1 to FIG. 7. A terminal device according to embodiments of this application is described in detail below with reference to FIG. 8 and FIG. 9.

FIG. 8 is a schematic block diagram of a terminal device 800 according to an embodiment of this application. The terminal device 800 includes a processing unit 810 and a transceiver unit 820.

The transceiver unit 820 is configured to send a first registration request when a first network is found on a public land mobile network PLMN of a first roaming area operator in a roaming area, where the first registration request is used for requesting registration of the terminal device with the first network on the PLMN of the first roaming area operator.

The transceiver unit 820 is further configured to receive a registration rejection message in response to the first registration request, where the registration rejection message is used for indicating that the terminal device has not successfully registered with the first network on the PLMN of the first roaming area operator, and used for instructing the terminal device to search the PLMN of the first roaming area operator for a second network with a lower network standard than the first network.

The processing unit 810 is configured to search, for the first network, a PLMN of each of other roaming area operators in the roaming area other than the first roaming area operator in response to the registration rejection message.

The transceiver unit 820 is further configured to send a second registration request when the first network is found on a PLMN of a second roaming area operator among the other roaming area operators, to register the terminal device with the first network on the PLMN of the second roaming area operator.

Optionally, the processing unit 810 is specifically configured to search, for the first network, the PLMN of each of the other roaming area operators within a first preset duration in response to the registration rejection message.

Optionally, the processing unit 810 is further configured to still search, for the first network, a PLMN of a roaming area operator among the other roaming area operators other than the second roaming area operator within the first preset duration when the terminal device has not successfully registered with the first network on the PLMN of the second roaming area operator and the first preset duration has not expired.

Optionally, the processing unit 810 is further configured to search a PLMN of at least one roaming area operator in the roaming area for the second network with the lower network standard than the first network when the terminal device has not successfully registered with the first network on the PLMN of the second roaming area operator and the first preset duration has expired.

Optionally, the processing unit 810 is further configured to search the PLMN of the at least one roaming area operator in the roaming area for the second network with the lower network standard than the first network before the first preset duration expires when the first preset duration has not expired and the first network is not found on a PLMN of any one of the other roaming area operators.

Optionally, the processing unit 810 is further configured to search the PLMN of the at least one roaming area operator in the roaming area for the second network with the lower network standard than the first network when the first preset duration has expired and the first network is not found on the PLMN of each of the other roaming area operators.

Optionally, the processing unit 810 is further configured to search the PLMN of the at least one roaming area operator in the roaming area for the second network with the lower network standard than the first network when the first network is not found on a PLMN of at least a part of the other roaming area operators.

Optionally, the processing unit 810 is further configured to search the PLMN of the at least one roaming area operator in the roaming area for the second network with the lower network standard than the first network when the terminal device has not successfully registered with the first network on the PLMN of the second roaming area operator.

Optionally, the processing unit 810 is specifically configured to preferentially search the PLMN of the first roaming area operator for the second network with the lower network standard than the first network.

Optionally, the processing unit 810 is specifically configured to: in response to the registration rejection message, prohibit use of the first network on the PLMN of the first roaming area operator within a second preset duration, and search the PLMN of each of the other roaming area operators for the first network within the first preset duration, where the first preset duration is less than the second preset duration.

Optionally, the processing unit 810 is specifically configured to start a timer in response to the registration rejection message, where a duration of the timer is the first preset duration; and

search the PLMN of each of the other roaming area operators for the first network within a duration of the timer.

Optionally, the registration rejection message includes any one of a cause value #111, a cause value #16, and a cause value #17.

Optionally, the first network is a 5G network or a 4G network.

It should be understood that the processing unit 810 may be configured to perform various steps performed by the terminal device in the methods 400, 600, and 700. For detailed descriptions, reference may be made to the foregoing related descriptions, and details are not described again.

It should be understood that the terminal device 800 herein is implemented in a form of functional units. The term "unit" herein may be an application specific integrated circuit (application specific integrated circuit, ASIC), an electronic circuit, a processor (for example, a shared processor, a dedicated processor, or a packet processor) for executing one or more software or firmware programs, a memory, a combinational logical circuit, and/or another suitable component that supports the described functions.

In this embodiment of this application, the terminal device in FIG. 8 may alternatively be a chip or a chip system, for example, a system on chip (system on chip, SoC).

FIG. 9 is a schematic structural diagram of a terminal device 900 according to an embodiment of this application. The terminal device 900 is configured to perform the corresponding steps and/or processes in the foregoing method embodiments.

The terminal device 900 includes a processor 910, a transceiver 920, and a memory 930. The terminal device 900 may correspond to the terminal device 110 shown in FIG. 2 above. The processor 910 herein may correspond to a processor 111 of the terminal device 110. The transceiver 920 herein integrates a function of an antenna 1 of the terminal device 110.

The processor 910, the transceiver 920, and the memory 930 communicate with each other through an internal connection path. The processor 910 may implement the functions of the processor 910 in various possible implementations of the terminal device 900. The memory 930 is configured to store instructions, and the processor 910 is configured to execute the instructions stored in the memory 930. Alternatively, the processor 910 may invoke these stored instructions to implement the functions of the processor 910 in the terminal device 900.

Optionally, the memory 930 may include a read-only memory and a random access memory, and provide instructions and data to the processor. A part of the memory may further include a nonvolatile random access memory. For example, the memory may further store information of a device type. The processor 910 may be configured to execute the instructions stored in the memory, and when the processor 910 executes the instructions stored in the memory, the processor 910 is configured to perform the steps and/or processes of the foregoing method embodiments corresponding to the terminal device.

The transceiver 920 is configured to send a first registration request when a first network is found on a public land mobile network PLMN of a first roaming area operator in a roaming area, where the first registration request is used for requesting registration of the terminal device with the first network on the PLMN of the first roaming area operator.

The transceiver 920 is further configured to receive a registration rejection message in response to the first registration request, where the registration rejection message is used for indicating that the terminal device has not successfully registered with the first network on the PLMN of the first roaming area operator, and used for instructing the terminal device to search the PLMN of the first roaming area operator for a second network with a lower network standard than the first network.

The processor 910 is configured to search, for the first network, a PLMN of each of other roaming area operators in the roaming area other than the first roaming area operator in response to the registration rejection message.

The transceiver 920 is further configured to send a second registration request when the first network is found on a PLMN of a second roaming area operator among the other roaming area operators, to register the terminal device with the first network on the PLMN of the second roaming area operator.

It should be understood that the specific process in which each device performs the corresponding steps in the foregoing method has been described in detail in the foregoing method embodiment. For brevity, details are not described herein again.

It is to be understood that in embodiments of this application, the processor of the apparatus may be a central processing unit (central processing unit, CPU). The processor may further be another general-purpose processor, a digital signal processor (DSP), an application-specific integrated circuit (ASIC), a field-programmable gate array (FPGA) or another programmable logic device, a discrete gate or transistor logic device, a discrete hardware component, or the like. The general-purpose processor may be a microprocessor, the processor may also be any conventional processor, or the like.

During implementation, the steps of the foregoing method may be completed through an integrated logic circuit of hardware or instructions in the form of software in the processor. The steps of the method disclosed in combination with embodiments of this application may be directly performed by a hardware processor, or may be performed through a combination of hardware and software units in the processor. The software unit may be located in a mature storage medium in the art, such as a random access memory, a flash memory, a read-only memory, a programmable read-only memory, an electrically erasable programmable memory, or a register. The storage medium is located in the memory. The processor executes the instructions in the memory and performs the steps of the foregoing method in combination with hardware thereof. To avoid repetition, details are not described herein again.

An embodiment of this application provides a computer program product. When the computer program product runs on a terminal device, the terminal device is enabled to perform the technical solution in the foregoing embodiments. Their implementation principles and technical effects are similar those in the method-related embodiments, and details are not described herein again.

An embodiment of this application provides a readable storage medium. The readable storage medium includes instructions. The instructions, when run on a terminal device, cause the terminal device to perform the technical solutions in the foregoing embodiments. The implementation principles and technical effects thereof are similar, and details are not described herein again.

An embodiment of this application provides a chip. The chip is configured to execute instructions. The chip, when run, performs the technical solutions in the foregoing embodiments. The implementation principles and technical effects thereof are similar, and details are not described herein again.

All or some of the foregoing embodiments may be implemented through software, hardware, firmware, or any combination thereof. During implementation through software, all or some of embodiments may be implemented in a form of a computer program product. The computer program product includes one or more computer instructions. When the computer instructions are loaded and executed on a computer, processes or functions in embodiments of this application are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, wireless or microwave) manner. The computer-readable storage medium may be any usable medium accessible by the computer, or a data storage device such as a server or a data center integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

It should be understood that "embodiment" mentioned throughout the specification means that particular features, structures, or characteristics related to the embodiment are included in at least one embodiment of this application. Therefore, various embodiments throughout the specification do not necessarily refer to the same embodiment. In addition, these specific features, structures, or characteristics may be combined in a proper manner in one or more embodiments. It should be understood that sequence numbers of the foregoing processes do not mean execution sequences in various embodiments of this application. The execution sequences of the processes should be determined based on functions and internal logic of the processes, and should not constitute any limitation on the implementation processes of embodiments of this application.

It should be further understood that in this application, "when" and "if" both mean that the UE or the base station performs corresponding processing in an objective situation. This is not limited in time, does not require a determining action to be performed by the UE or the base station when implementing the processing, and does not mean that another limitation exists.

A person of ordinary skill in the art may understand that various numerical designations such as first and second in this application are merely used for differentiation for ease of description, are not construed as a limitation on the scope of embodiments of this application, and are also used for indicating a sequence.

In this application, an element represented in a singular form is intended to represent "one or more", rather than "one and only one", unless otherwise specified. In this application, unless otherwise specified, "at least one" is intended to represent "one or more", and "a plurality of" is intended to represent "two or more".

The term "and/or" herein is merely an association relationship describing associated objects, which means that three relationships may exist, for example, A and/or B may indicate three cases: A exists alone, A and B exist simultaneously, and B exists alone, where A may be singular or plural, and B may be singular or plural.

The expression "at least one of ..." in this specification represents all or any combination of the listed items. For example, "at least one of A, B, and C" may represent the following six cases: only A exists, only B exists, only C exists, both A and B exist, both B and C exist, and A, B, and C all exist, where A may be singular or plural, B may be singular or plural, and C may be singular or plural.

A person of ordinary skill in the art may be aware that units and algorithm steps of the examples described with reference to embodiments disclosed in this specification can be implemented through electronic hardware or a combination of computer software and electronic hardware. Whether these functions are performed by hardware or software depends on specific applications and design constraints of the technical solutions. A person skilled in the art may use different methods to implement the described functions for each particular application, but it is not considered that such implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it is to be understood that the disclosed system, apparatus, and method may be implemented in other manners. For example, the apparatus embodiment described above is merely an example. For example, division into the units is merely logical function division, and may be another division during actual implementation. For example, a plurality of units or components may be combined or integrated into another system, or some features may be ignored or not executed. In addition, the displayed or discussed mutual coupling or direct coupling or communication connection may be implemented through some interfaces. The indirect coupling or communication connection between the apparatuses or units may be implemented in electronic, mechanical, or other forms.

The units described as separate components may or may not be physically separated, and the components displayed as units may or may not be physical units, and may be located in one place or may be distributed on a plurality of network units. Some or all of the units may be selected based on an actual need to achieve the objectives of the solutions of embodiments.

In addition, functional units in embodiments of this application may be integrated into one processing unit, or each of the units may be physically separated, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or a part of the technical solutions may be implemented in the form of a software product. The computer software product is stored in a storage medium, and includes several instructions for enabling a computer device (which may be a personal computer, a server, a network device, or the like) to perform all or part of the steps of the method described in embodiments of this application. The foregoing storage medium includes: various media that can store program code, such as a USB flash drive, a removable hard disk, a read only memory (read only memory, ROM), a random access memory (random access memory, RAM), a magnetic disk, or a compact disc.

For same or similar parts in embodiments of this application, reference may be made to each other. In embodiments of this application and the implementations/implementation methods/implementing methods in embodiments, unless otherwise specified or in logical conflicts, terms and/or descriptions between different embodiments and implementations/implementation methods/implementing methods in embodiments have consistency and may be mutually referenced. Technical features in different embodiments and implementations/implementation methods/implementing methods in embodiments may be combined according to internal logical relationships thereof to form a new embodiment, implementation, or implementation method. The foregoing implementations of this application do not constitute a limitation on the protection scope of this application.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims. In conclusion, the foregoing embodiments are merely preferred embodiments of the technical solutions of this application, and are not used for limiting the protection scope of this application. Any modification, equivalent substitution, improvement, and the like made within the spirit and the principle of this application shall fall within the protection scope of this application.

## Claims

1. A network registration method in a roaming scenario, applied to a terminal device and comprising:
sending a first registration request when a first network is found on a public land mobile network PLMN of a first roaming area operator in a roaming area, wherein the first registration request is used for requesting registration of the terminal device with the first network on the PLMN of the first roaming area operator;
receiving a registration rejection message in response to the first registration request, wherein the registration rejection message is used for indicating that the terminal device has not successfully registered with the first network on the PLMN of the first roaming area operator, and used for instructing the terminal device to search the PLMN of the first roaming area operator for a second network with a lower network standard than the first network;
searching, for the first network, a PLMN of each of other roaming area operators in the roaming area other than the first roaming area operator in response to the registration rejection message; and
sending a second registration request when the first network is found on a PLMN of a second roaming area operator among the other roaming area operators, to register the terminal device with the first network on the PLMN of the second roaming area operator.

2. The network registration method according to claim 1, wherein the searching, for the first network, a PLMN of each of other roaming area operators in the roaming area other than the first roaming area operator in response to the registration rejection message comprises:
searching, for the first network, the PLMN of each of the other roaming area operators within a first preset duration in response to the registration rejection message.

3. The network registration method according to claim 2, further comprising:
still searching, for the first network, a PLMN of a roaming area operator among the other roaming area operators other than the second roaming area operator within the first preset duration when the terminal device has not successfully registered with the first network on the PLMN of the second roaming area operator and the first preset duration has not expired.

4. The network registration method according to claim 2 or 3, further comprising:
searching a PLMN of at least one roaming area operator in the roaming area for the second network with the lower network standard than the first network when the terminal device has not successfully registered with the first network on the PLMN of the second roaming area operator and the first preset duration has expired.

5. The network registration method according to any one of claims 2 to 4, further comprising:
searching the PLMN of the at least one roaming area operator in the roaming area for the second network with the lower network standard than the first network before the first preset duration expires, when the first preset duration has not expired and the first network is not found on a PLMN of any one of the other roaming area operators.

6. The network registration method according to any one of claims 2 to 5, further comprising:
searching the PLMN of the at least one roaming area operator in the roaming area for the second network with the lower network standard than the first network when the first preset duration has expired and the first network is not found on the PLMN of each of the other roaming area operators.

7. The network registration method according to any one of claims 1 to 6, further comprising:
searching the PLMN of the at least one roaming area operator in the roaming area for the second network with the lower network standard than the first network when the first network is not found on a PLMN of at least a part of the other roaming area operators.

8. The network registration method according to any one of claims 1 to 7, further comprising:
searching the PLMN of the at least one roaming area operator in the roaming area for the second network with the lower network standard than the first network when the terminal device has not successfully registered with the first network on the PLMN of the second roaming area operator.

9. The network registration method according to any one of claims 4 to 8, wherein the searching the PLMN of the at least one roaming area operator in the roaming area for the second network with the lower network standard than the first network comprises:
preferentially searching the PLMN of the first roaming area operator for the second network with the lower network standard than the first network.

10. The network registration method according to any one of claims 2 to 6, wherein the searching, for the first network, the PLMN of each of the other roaming area operators within a first preset duration in response to the registration rejection message comprises:
in response to the registration rejection message, prohibiting use of the first network on the PLMN of the first roaming area operator within a second preset duration, and searching the PLMN of each of the other roaming area operators for the first network within the first preset duration, wherein the first preset duration is less than the second preset duration.

11. The network registration method according to any one of claims 2 to 10, wherein the searching, for the first network, the PLMN of each of the other roaming area operators within a first preset duration in response to the registration rejection message comprises:
starting a timer in response to the registration rejection message, wherein a duration of the timer is the first preset duration; and
searching the PLMN of each of the other roaming area operators for the first network within the duration of the timer.

12. The network registration method according to any one of claims 1 to 11, wherein the registration rejection message comprises any one of the following cause values: a cause value #111, a cause value #16, and a cause value #17.

13. The network registration method according to any one of claims 1 to 12, wherein the first network is a 5G network or a 4G network.

14. A terminal device, comprising:
a memory, configured to store computer instructions; and
a processor, configured to invoke the computer instructions stored in the memory, to perform the method according to any one of claims 1 to 13.

15. A computer-readable storage medium, configured to store computer instructions, wherein the computer instructions are used for implementing the method according to any one of claims 1 to 13.

16. A chip, comprising:
a memory, configured to store instructions; and
a processor, configured to invoke the instructions from the memory and run the instructions, to enable a communication device installed with the chip system to perform the method according to any one of claims 1 to 13.
